# EUROPEAN PATENT APPLICATION

(11) **EP 4 708 211 A1**
(43) Date of publication of application: **11.03.2026**
(21) Application number: 25191310.9
(22) Date of filing: 23.07.2025
(51) Int. Cl.: G06V 10/10, G06V 10/24, G06V 10/25, G06V 10/28, G06V 10/74, G06V 10/82, G06V 20/10, G06V 20/56

(54) **METHODS OF DETECTING ANOMALIES IN AGRICULTURAL FIELDS, AND RELATED AGRICULTURAL VEHICLES**

(30) Priority: 09.09.2024 GB 202413245
(71) Applicant: AGCO International GmbH, 8212 Neuhausen am Rheinfall (CH)
(72) Inventor: MUJKIC, Esma, 8930 Randers (DK); CHRISTIANSEN, Martin Peter, 8930 Randers (DK)
(74) Representative: AGCO Intellectual Property Department

(57) **Abstract**

An agricultural vehicle includes multiple stereo cameras operably coupled to the agricultural vehicle, and an anomaly detection system that receives image data from the stereo cameras. The anomaly detection system operates on a computing device including at least one processor, and instructions that cause the processor to receive the image data from the multiple stereo cameras, utilize advanced machine learning model techniques to detect anomaly predictions in an agricultural field surrounding the agricultural vehicle, and control operations of the agricultural vehicle based on the anomaly predictions. Related agricultural vehicles and methods are also disclosed.

## Description

### CROSS-REFERENCE TO RELATED APPLICATION

N/A.

### FIELD

Embodiments of the present disclosure relate generally to agricultural vehicles including various sensors that provide data to an anomaly detection system. Embodiments of the present disclosure further relate to controlling operations of the agricultural vehicle in an agricultural environment based on anomalies detected by the anomaly detection system, and to related systems and methods.

### BACKGROUND

In the field of agriculture, vehicles such as tractors, harvesters, and other specialized equipment are commonly used to perform various tasks in broad acre fields. It has become increasingly common for these types of agricultural vehicles to feature automated driving and/or safety systems that rely on data from various sensors mounted to the agricultural vehicle to automatically move the agricultural vehicle through a field or other similar environment. These vehicles, however, often operate in complex and dynamic agricultural environments where anomalies may be present. For example, anomalies in an agricultural setting may include stones, non-standard structures, misplaced objects, power poles, trees, buildings, bodies of water, human bystanders, animals, and more.

Some systems include anomaly detection features that rely on data from LiDAR units, GNSS units, and/or RADAR units. While these anomaly detectors can provide some information about the environment surrounding an agricultural vehicle, they generally have limitations in terms of accuracy, cost, and complexity. Additionally, such anomaly detectors are often poorly suited for detecting many of the types of anomalies commonly present in agricultural settings such as, small objects, thin obstacles, or irregularly shaped features.

In some instances, anomaly detectors have been proposed that incorporate camera-based features to compensate for the shortcomings of other sensor-based systems. Camera-based anomaly detectors can capture rich visual information in a more cost-effective way. Despite this, existing camera-based systems for anomaly detection typically suffer from several issues, such as difficulty in handling varying lighting conditions, occlusions, and clutter in images. Moreover, many of these camera-based systems rely on traditional image processing techniques or simple machine learning models, which typically fail to robustly and accurately detect a wide range of anomalies in complex agricultural settings.

These shortcomings are further compounded by existing anomaly detection systems' inability to consider spatial distributions and relationships between anomalies in a complex setting. This is particularly true when the anomaly is moving through the agricultural setting (e.g., as with a person who is walking through a field), when the agricultural vehicle is moving, or when both the anomaly and the vehicle are moving-as is common in agricultural settings.

### BRIEF SUMMARY

In some embodiments, a method of operating an agricultural vehicle in an agricultural field includes receiving image data from a plurality of stereo cameras operably coupled to the agricultural vehicle, rectifying the image data to generate rectified image data for each of the plurality of stereo camera, generating a depth map of depth data based on the rectified image data, applying an anomaly detection deep neural network to the rectified image data to generate one or more anomaly predictions, combining the one or more anomaly predictions based on the rectified image data from each of the plurality of stereo cameras to generate combined predicted anomaly data, and controlling one or more operations of the agricultural vehicle based on the combined predicted anomaly data and the depth map.

Receiving image data from a plurality of stereo cameras operably coupled to the agricultural vehicle may include receiving image data from a plurality of stereo cameras operably coupled to the agricultural vehicle, each stereo camera configured to capture a different perspective of the agricultural field than other stereo cameras of the plurality of stereo cameras.

The method may further include identifying areas of the agricultural field where the predicted anomaly data from more than one of the stereo cameras match.

Combining the one or more anomaly predictions based on the rectified image data from each of the plurality of stereo cameras to generate combined predicted anomaly data may include combining predicted anomaly data based on the image data from each of the plurality of stereo cameras into a single mask.

In some embodiments, combining the one or more anomaly predictions based on the rectified image data from each of the plurality of stereo cameras to generate combined predicted anomaly data includes generating an instance mask comprising multiple layers based on the combined predicted anomaly data, each layer of the instance mask comprising predicted anomaly data based on image data from a different one of the stereo cameras.

Combining the one or more anomaly predictions based on the rectified image data from each of the plurality of stereo cameras to generate combined predicted anomaly data may include generating a priority-based mask based on the combined anomaly data.

In some embodiments, generating a priority-based mask based on the combined anomaly data includes generating a first mask including instances where the one or more anomaly predictions based on the image data from each of the plurality of stereo camera match, and generating a second mask including instances where the one or more anomaly predictions based on the image data from at least one of the stereo cameras does not match the one or more anomaly predictions based on the image data from at least another of the stereo cameras.

The method may further include reverting the depth map or depth data to additional image data.

In some embodiments, the method includes applying the anomaly detection deep neural network to the additional image data.

Generating a depth map of depth data may include performing one or more of block matching, Recurrent All-Pairs Field Transforms (RAFT), or optical flow estimation processes on the rectified image data to generate a disparity map or disparity data, and generating the depth map based on the disparity data and a focal length of the stereo cameras.

In some embodiments, generating a depth map includes determining spatial distribution of objects in the agricultural field.

Rectifying the image data may include aligning the image data received from each lens of each stereo camera onto a common image plane.

The method may further include preprocessing the image data to synchronize the image data with global navigation satellite system.

Controlling one or more operations of the agricultural vehicle based includes one or more of causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight anomalies indicated by the combined predicted anomaly data, causing the agricultural vehicle to flash onboard visual lights, or causing the agricultural vehicle to sound a horn or other auditory system.

In some embodiments, an agricultural vehicle positioned in an agricultural field includes a plurality of stereo cameras coupled to the agricultural vehicle, and an anomaly detection system operably coupled to the plurality of stereo cameras. The anomaly detection system includes at least one processor, and at least one non-transitory computer-readable storage medium having instructions thereon that, when executed by the at least one processor, cause the anomaly detection system to receive image data from each of the plurality of stereo cameras, rectify the image data to generate rectified image data for each of the plurality of stereo camera, generate a depth map based on the rectified image data, apply an anomaly detection deep neural network to the rectified image data to generate one or more anomaly predictions, combine the one or more anomaly predictions based on the rectified image data from each of the plurality of stereo cameras to generate combined predicted anomaly data, and control one or more operations of the agricultural vehicle based on the combined predicted anomaly data.

Each stereo camera of the plurality of stereo cameras may include a polarizer array and is configured to generate image data comprises polarization data.

In some embodiments, the at least one non-transitory computer-readable storage medium further stores instructions thereon that, when executed by the at least one processor, cause the anomaly detection system to determine locations in the agricultural field where an anomaly is predicted based on the rectified image data from each of the plurality of stereo cameras.

The instructions, when executed by the at least one processor, may cause the anomaly detection system to apply a first anomaly detection deep neural network to the rectified image data from a first stereo camera trained with a first dataset, and apply a second anomaly detection deep neural network to the rectified image data from a second stereo camera trained with a second dataset.

In some embodiments, the instructions, when executed by the at least one processor, cause the anomaly detection system to generate a confidence level for each of the one or more anomaly predictions.

In some embodiments, an agricultural vehicle includes a propulsion system, wheels operably coupled to a chassis of the agricultural vehicle, a plurality of stereo cameras coupled to the agricultural vehicle, and an anomaly detection system operably coupled to the plurality of stereo cameras. The anomaly detection system includes at least one processor, and at least one non-transitory computer-readable storage medium having instructions thereon that, when executed by the at least one processor, cause the anomaly detection system to receive image data from each of the plurality of stereo cameras, rectify the image data to generate rectified image data for each of the plurality of stereo camera, generate a depth map based on the rectified image data, apply an anomaly detection deep neural network to the rectified image data to generate one or more anomaly predictions, combine the one or more anomaly predictions based on the rectified image data from each of the plurality of stereo cameras to generate combined predicted anomaly data, and control one or more operations of the agricultural vehicle based on the combined predicted anomaly data.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified overview of an agricultural field including both static and dynamic anomalies where an agricultural vehicle may move through a predefined route, in accordance with one or more embodiments of the disclosure.
FIG. 2 is a simplified perspective view of an agricultural vehicle including an anomaly detection system, in accordance with one or more embodiments of the disclosure.
FIG. 3 is a simplified overview of an encoder-decoder machine learning model, in accordance with one or more embodiments of the disclosure.
FIG. 4 is an overview diagram of the process of utilizing an encoder-decoder machine learning model to generate anomaly predictions associated with an agricultural field, in accordance with one or more embodiments of the disclosure.
FIGS. 5 and 6 illustrate additional detail associated with the process of generating anomaly predictions associated with an agricultural field, in accordance with one or more embodiments of the disclosure.
FIG. 7 is an embodiment of the anomaly detection system operating in connection with the agricultural vehicle, in accordance with one or more embodiments of the disclosure.
FIG. 8 is a simplified flow chart illustrating a method of generating validated anomalies and/or generating validated anomaly map, in accordance with one or more embodiments of the disclosure.
FIG. 9 is a schematic of a computer-readable storage medium including processor-executable instructions configured to embody one or more of the methods of operating an agricultural vehicle, according to one or more embodiments of the disclosure.

### DETAILED DESCRIPTION

The illustrations presented herein are not actual views of any agricultural vehicles or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure, assembly, spreader, or agricultural implement. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structures and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description, it should be understood that the terms "longitudinal" and "transverse" are made in relation to a machine's (e.g., agricultural implement's, agricultural application machine's) normal direction of travel. In other words, the term "longitudinal" equates to the fore-and-aft direction, whereas the term "transverse" equates to the crosswise direction, or left and right. As used herein, the terms "lateral" and "transverse" are used interchangeably. Furthermore, the terms "axial" and "radial" are made in relation to a rotating body such as a shaft, wherein axial relates to a direction along the rotation axis and radial equates to a direction perpendicular to the rotation axis.

As mentioned above, conventional anomaly detection techniques fail to robustly and accurately detect anomalies that are unique to agricultural settings. According to embodiments described herein, an agricultural vehicle includes an anomaly detection system configured to predict one or more anomalies in an agricultural field in which the agricultural vehicle is operated. A plurality of stereo cameras may be operably coupled to the agricultural vehicle and configured to gather image data of the agricultural field. The stereo cameras are operably coupled to the anomaly detection system. The stereo cameras are configured to capture image data of the agricultural field, such as while the agricultural vehicle traverses the agricultural field. The anomaly detection system may include one or more anomaly detection deep neural networks configured to generate anomaly predictions based on the image data. In some embodiments, the anomaly detection system includes an anomaly detection deep neutral network that is unique for each stereo camera. In some such embodiments, each stereo camera may be associated with a unique anomaly detection deep neural network, which may be trained on a dataset associated with the particular camera (e.g., the pose, orientation, or other properties of the particular stereo camera). After receiving the image data with the stereo cameras, the anomaly detection system may apply the anomaly detection deep neural network(s) to the image data from the image data from the stereo cameras to generate anomaly predictions and/or anomaly data of a location of predicted anomalies in the agricultural field. The anomaly predictions that are based on the image data from different stereo cameras may be combined to validate the anomaly predictions and/or to generate a confidence score or confidence level for the anomaly predictions. In some embodiments, the anomaly detection system is configured to determine whether the predicted anomalies based on the image data from each of the stereo cameras matches with the predicted anomalies based on the image data from the other stereo cameras. The anomaly detection system may determine, for each anomaly identified based on sensor data from each stereo camera, whether the anomaly detection deep neural network has identified the anomaly based on the image data from each of the other stereo cameras, some of the other stereo cameras, or none of the other stereo cameras. In some embodiments, the anomaly detection system generates a map and/or otherwise identifies areas of the agricultural field where the anomaly detection system has predicted an anomaly based on the sensor data from a stereo camera that matches predicted anomalies based on the image data from the other stereo cameras.

In some embodiments, the anomaly detection system is further configured to generate a depth map based on the image data from the stereo cameras. The depth map may facilitate identifying and/or associating additional data with each of the predicted anomalies. In some embodiments, the anomaly detection system is configured to control one or more operations of the agricultural vehicle based on the predicted anomalies and the depth map. By implementing multiple stereo cameras to generate the predicted anomalies, the anomaly detection system may include a plurality of anomaly detectors, each with a unique perspective of the agricultural field. The plurality of anomaly detectors (each based on image data captured by a particular stereo camera) may facilitate more robust detection and validation of predicted anomalies, enhancing the safety of the agricultural vehicle. For example, the multiple stereo cameras and associated anomaly detectors may facilitate reducing false positive predicted anomalies (a predicted anomaly that is truly not present in the agricultural field) and may also reduce false negatives (the failure to identify an anomaly present in the agricultural field). Accordingly, the anomaly detection system may facilitate safer and more efficient operation for the agricultural vehicle.

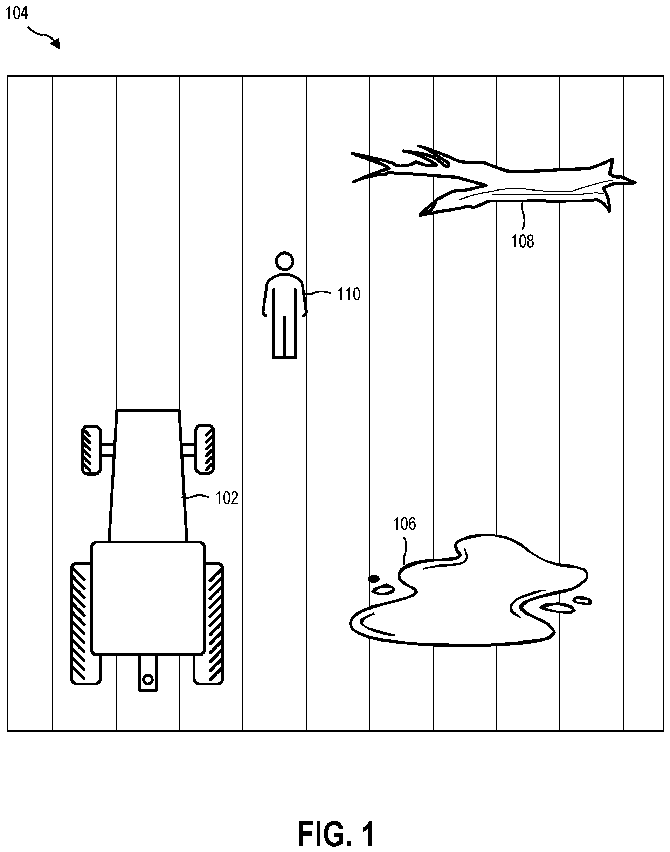

To illustrate, FIG. 1 depicts an agricultural vehicle 102 moving in an agricultural field 104. Generally, the agricultural vehicle 102 may move along a predetermined route to interact with the entire agricultural field 104 (e.g., to harvest a crop, to turn over the soil, to spread fertilizer, etc.). In some embodiments, the agricultural vehicle 102 may be un-manned-either operating autonomously or being driven remotely. In additional embodiments, the agricultural vehicle 102 may be manned by a human operator. Despite this, even when a human operator is driving the agricultural vehicle 102, anomalies may be difficult for the operator to see due to poor lighting conditions, placement of the anomalies, and so forth.

As further shown in FIG. 1, the agricultural field 104 may include various anomalies. For example, the agricultural field 104 may include pooled water 106, a fallen tree 108, or even a person 110 walking through the agricultural field 104. In one or more embodiments, an anomaly within the agricultural field 104 can include any object, person, or animal within the agricultural field 104 whose presence in the agricultural field 104 deviates from what is standard, normal, or expected in that setting. To illustrate, the pooled water 106 may be present as the result of a broken pipe or heavy rainstorm. Similarly, the fallen tree 108 may have been standing near the agricultural field 104 until it was blown down in a storm. Some anomalies in the agricultural setting may be static, such as with the pooled water 106 and the fallen tree 108. Other anomalies in the same setting may be dynamic (e.g., moving) as with the person 110, animals, other vehicles, objects blowing in the wind, and so forth. Moreover, the agricultural vehicle 102 may also be static or dynamic within the agricultural field 104.

Any of the anomalies potentially present within the agricultural field 104 can present hazards and safety issues for the agricultural vehicle 102. For example, the pooled water 106 can cause the agricultural vehicle 102 to get stuck in the mud or can cause engine problems if the water is too deep. The fallen tree 108 can cause the agricultural vehicle 102 or a boom extending from the agricultural vehicle 102 to become ensnared or blocked. Moreover, the person 110 could be seriously harmed if the agricultural vehicle 102 travels too close to them. All of these scenarios are further complicated when the anomaly and/or the agricultural vehicle 102 is dynamic (e.g., moving), when the current weather is making visibility difficult, when it is nighttime, and so forth.

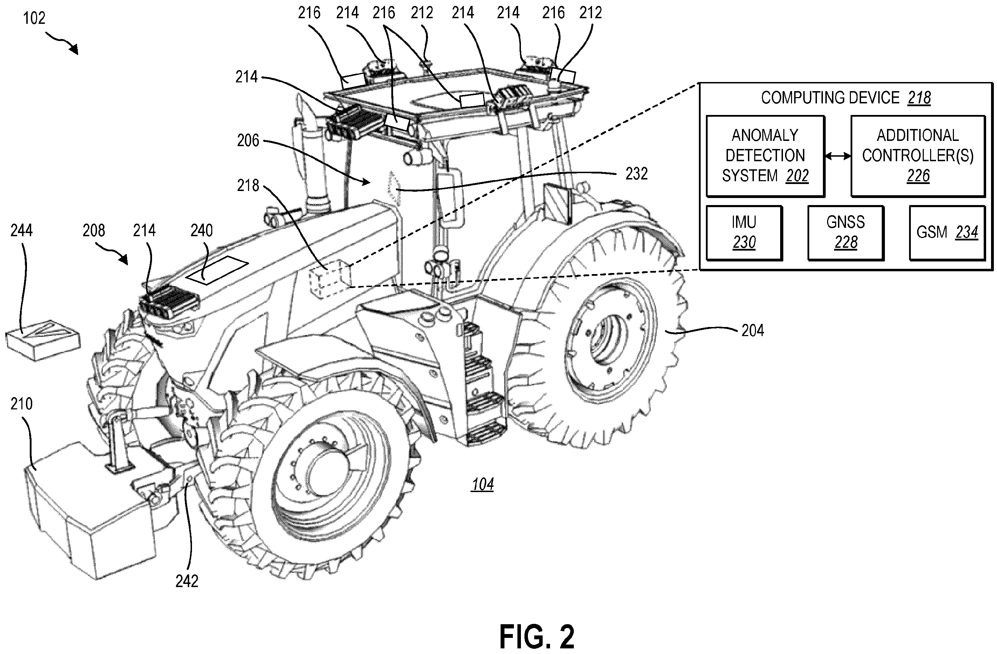

In one or more embodiments, the anomaly detection system disclosed herein utilizes various approaches to robustly and accurately detect anomalies in an agricultural field (e.g., the agricultural field 104) and control operations of the agricultural vehicle 102 based on those detected anomalies. FIG. 2 is a simplified perspective view of the agricultural vehicle 102 including an anomaly detection system 202 as part of a computing device 218, in accordance with one or more embodiments of the disclosure. In some embodiments, the agricultural vehicle 102 includes a tractor. However, the agricultural vehicle 102 may include agricultural vehicles or implements other than and/or in addition to a tractor, such as, for example, a combine, a planter, a tiller, a sprayer, a harvester, a swather, a mower, a spreader, or another agricultural vehicle. The agricultural vehicle 102 may be configured to drive over the agricultural field 104, such as discussed above. The agricultural vehicle 102 includes wheels 204 (e.g., tires) configured for facilitating traversal of the agricultural vehicle 102 over the agricultural field 104.

The agricultural vehicle 102 includes an operator cabin 206 from which an operator of the agricultural vehicle 102 may control the agricultural vehicle 102, and an engine compartment 208 housing an engine or other propulsion system for providing a motive force for moving the agricultural vehicle 102. In some embodiments, the propulsion system includes motors operably coupled to the wheels 204 of the agricultural vehicle 102. The agricultural vehicle 102 includes a steering system (e.g., a steering wheel and associated steering column, universal joint, and rack-and-pinion) configured for facilitating steering and navigation of the agricultural vehicle 102. The agricultural vehicle 102 may include one or more additional structures or assemblies, such as a header 210, configured for performing one or more agricultural operations (e.g., towing an agricultural implement (e.g., a spreader, row units of a planter), a trailer, etc.

As mentioned above, the agricultural vehicle 102 may include various sensors operably coupled to the agricultural vehicle 102. For example, the agricultural vehicle 102 may include one or more cameras 214 operably coupled to the agricultural vehicle 102. The one or more cameras 214 may be configured to capture image data. The image data may be grayscale image data, color image data (e.g., in the RGB color space), or multispectral image data. The one or more cameras 214 may include one or more of a 2D-camera, a stereo camera, a time-of-flight (ToF) camera configured to capture 2D and/or 3D image data. In some embodiments, a ToF camera may facilitate determining depth information and can improve the accuracy of image data and object pose determination based on the image data received by the one or more cameras 214.

In some embodiments, each camera 214 includes a set of cameras and/or a set of lenses spaced from one another. For example, each camera 214 may include a tri-camera set including three cameras. In some embodiments, and as described herein, the image data from each camera of the tri-camera set may be combined to improve the quality of image data captured by the camera 214. For example, a first camera may include an ultra-wide camera, a second camera may include a wide-angle camera, and a third camera may include a telephoto camera. In some such embodiments, each camera 214 includes three individual cameras directly neighboring one another.

In some embodiments, each camera 214 includes a stereo camera including two or more lenses with a separate image sensor or film frame for each lens. The stereo camera 214 may be configured to capture three-dimensional (3D) images using stereo photography techniques. In some embodiments, the camera 214 is configured to generate depth information based on the image data and the properties of the stereo camera 214 (e.g., the distance between the two cameras (the baseline), and the focal length of the camera). In some embodiments, the camera 214 includes a red, green, blue-depth (RGB-D) camera. The image data from each camera 214 may include image data received by each of the one or more lenses of the image camera 214 (e.g., image data received from each lens of a stereo camera).

The cameras 214 may each include one or more of a red, green, blue (RGB) camera, a RGB-IR camera (configured to provide visible images and thermal (e.g., IR) images), an RGB-SWIR line scan camera (a 4-sensor RGB SWIR line scan camera), a charge-coupled device (CCD) camera, a complementary metal oxide semiconductor (CMOS) image sensor, a stereoscopic camera, a short-wave infrared (SWIR) camera (e.g., configured to capture electromagnetic radiation (e.g., light) having a wavelength within a range of from about 0.4 µm to about 2.5 µm, such as from about 0.9 µm to about 1.7 µm or from about 0.4 µm to about 1.9 µm), or a digital single-reflex camera. In some embodiments, the one or more cameras 214 are configured to capture image data through smoke, fog, snow, and rain and may include a SWIR camera. The camera 214 may be configured to capture one or more of depth data, RGB image data, SWIR data, long-wave IR (LWIR) data, and/or near-infrared (NIR) data. As used herein, image data captured by the cameras 214 includes depth data and one or more of RGB data, IR data, SWIR data, polarization data, and other data.

In some embodiments, the cameras 214 each include a micro-polarizer (a micro-polarizer array) and the image data further includes polarization data. The micro-polarizer array may be configured to polarize the image data in, for example, four separate quadrants; a first quadrant may be polarized in a first direction, a second quadrant may be polarized in a second direction substantially perpendicular to the first direction; a third quadrant may be polarized in a third direction (e.g., about 45° from the first direction and the second direction), and a fourth quadrant may be polarized in a fourth direction substantially perpendicular to the third direction.

In some embodiments, the cameras 214 each include a color filter array, such as a Bayer color filter array (also referred to as a "Bayer filter or a "Bayer filter mosaic"). The color filter array may include, for example, a filter pattern that is half green, one quarter red, and one quarter blue (and also called BGGR, RGBG, GRBG, or RGGB). In some embodiments, the color filter includes repeating units of a RGGB grid, wherein 2x2 group of pixels includes two green pixels, one red pixel, and one blue pixel.

In some embodiments, each of the cameras 214 includes a color filter array stacked with a micro-polarizer array and is configured to generate image data including polarization data at different angles and RGB image data separated into an array. The micro-polarizer and the color filter array may facilitate detection of textures, stress, and material properties of objects in the image data, which may facilitate detection of anomalies from normal patterns. In addition, the color filter array stacked with a micro-polarizer array may reduce false positives that would be valued by glare and/or reflections. Accordingly, in some embodiments, each set of image data captured by each camera 214 includes polarization data in addition to additional image data (e.g., RGB data).

The one or more cameras 214 may be configured to capture image data at a frame rate within a range of from about 10 Hz to about 30 Hz. In some embodiments, the frame rate of each of the one or more cameras 214 is substantially the same. However, the disclosure is not so limited, and the frame rate of the one or more cameras 214 may be different than that described. A FOV of each of the one or more cameras 214 may be within a range of from about 60° to about 360°, such as from about 60° to about 90°, from about 90° to about 120°, from about 120° to about 180°, or from about 180° to about 360°. However, the disclosure is not so limited, and the FOV of each of the one or more cameras 214 may be different than those described. In some embodiments, the FOV of each of the one or more cameras 214 is substantially the same as the FOV of the one or more cameras 214.

In some embodiments, each camera 214 is configured to capture image data of the agricultural field 104 from a unique perspective relative to the other cameras 214. As described herein, capturing image data with cameras 214 each having a unique perspective of the agricultural field 104 may facilitate improved detection and verification of anomalies in the agricultural field 104. For example, if multiple cameras 214, each with a unique perspective of the agricultural field 104 detect an anomaly, the presence of the anomaly may be verified and/or have a relatively high confidence score, which may be used to facilitate one or more control operations of the agricultural vehicle 102. In some embodiments, the use of multiple cameras 214 may facilitate a reduction and/or elimination of the parallax effect.

Additionally, the agricultural vehicle 102 may include one or more light detection and ranging (LiDAR) units 212. In one or more embodiments, the one or more LiDAR units 212 measure distances by illuminating a target with laser light and analyzing the reflected light. For example, each of the one or more LiDAR units 212 can emit a laser pulse toward an object or surface. This laser pulse hits the object or surface and reflects back to the LiDAR unit, which detects the reflected light. The one or more LiDAR units 212 (or a system operating the one or more LiDAR units 212) calculates the distance to the object or surface by measuring the time it took for the laser pulse to return (e.g., "time of flight" or TOF). In one or more embodiments, the one or more LiDAR units 212 have both an orientation and a field of view. In some embodiments, each of the one or more LiDAR units 212 share an orientation and a field of view with a corresponding camera from the one or more cameras 214. As such, by utilizing the one or more LiDAR units 212-alone or in combination with the one or more cameras 214-the anomaly detection system 202 can capture highly accurate 3D data of the agricultural field 104. The one or more LiDAR units 212 can include one or more of rotating LiDAR units, flash LiDAR units, solid-state time of flight LiDAR units, or solid-state frequency-modulated LiDAR units. The one or more LiDAR units 212 may generate LiDAR data.

In some embodiments, the agricultural vehicle 102 may further include one or more RADAR units 216 operably coupled to the agricultural vehicle 102. In some embodiments, a field of view (FOV) of the one or more cameras 214 is substantially the same (e.g., overlaps) a FOV of the one or more RADAR units 216. In one or more embodiments, the one or more cameras 214 and the one or more RADAR units 216 are configured to provide a 3D surround stereo view of the surroundings of the agricultural vehicle 102.

The one or more RADAR units 216 may include a transmitter configured to transmit a high-frequency signal, an antenna configured to broadcast the high-frequency signal, and a receiver configured to receive the high-frequency signal reflected from one or more objects in the environment. The one or more RADAR units can include one or more of frequency-modulated continuous wave RADAR units or stepped frequency modulation RADAR units. The one or more RADAR units 216 may further include a signal processor configured to determine one or more properties of object(s) from which the high-frequency signal was reflected. The one or more RADAR units 216 may be configured to scan and receive RADAR data at a rate within a range of from about 10 Hz to about 50 Hz. However, the disclosure is not so limited, and the scan rate of the one or more RADAR units 216 may be different than that described. In some embodiments, the scan rate of the one or more RADAR units 216 may be different than the frame rate of the one or more cameras 214.

A FOV of each of the one or more RADAR units 216 may be within a range of from about 60° to about 360°, such as from about 60° to about 90°, from about 90° to about 120°, from about 120° to about 180°, or from about 180° to about 360°. However, the disclosure is not so limited, and the FOV of each of the one or more RADAR units 216 may be different than those described. In some embodiments, the FOV of each of the one or more RADAR units 216 is substantially the same as the FOV of the remaining one or more RADAR units 216.

The one or more RADAR units 216 may include a synthetic aperture RADAR (SAR) or an inverse synthetic aperture RADAR (ISAR) configured to facilitate receiving relatively higher resolution data compared to conventional RADARs. The one or more RADAR units 216 may be configured to scan the RADAR signal across a range of angles to capture a 2D representation of the environment, each pixel representing the RADAR reflectivity at a specific distance and angle. In other embodiments, the one or more RADAR units 216 includes a 3D RADAR configured to provide range (e.g., distance, depth), velocity (also referred to as "Doppler velocity"), azimuth angle, and elevational angle. The one or more RADAR units 216 may be configured to provide a 3D RADAR point-cloud to the anomaly detection system 202.

The RADAR data may include one or more of analog-to-digital (ADC) signals, a RADAR tensor (e.g., a range-azimuth-doppler tensor), and a RADAR point-cloud. In some embodiments, the output RADAR data includes a point-cloud, such as a 2D RADAR point-cloud or a 3D RADAR point-cloud (also, simply referred to herein as a "3D point-cloud"). In some embodiments, the output RADAR data includes a 3D RADAR point-cloud. The RADAR units 216 may each be configured to generate RADAR data.

The one or more LiDAR units 212, the one or more cameras 214, the one or more RADAR units 216, and any other sensors mounted to the agricultural vehicle 102 may directly neighbor one another. For example, in some embodiments, the one or more cameras 214 are located at substantially a same elevation (e.g., height) as the one or more RADAR units 216 or other sensors, but are laterally spaced therefrom. In other embodiments, the one or more cameras 214 are horizontally aligned (e.g., left and right) with the one or more RADAR units 216 or other sensors, but is vertically displaced therefrom (e.g., located above or below the one or more RADAR units 216).

Each of the image data, the LiDAR scan data (the LiDAR data), and the RADAR data may be of the environment around the agricultural vehicle 102. For example, the image data, LiDAR data, and the RADAR data may be of one or more of the agricultural field 104, animals (e.g., livestock, wild animals, domestic animals), humans, crops, rows of crops, trees, weeds, other plants, utility lines, bales of hay, rocks, wind turbines, fences and fence posts, shelter belts (lines of trees), agricultural vehicles (e.g., tractors, planters, sprayers, combiners, harvesters, mowers, trailers, forager), or other living object or inanimate object that may be proximate the agricultural vehicle 102 in the agricultural field 104.

The agricultural vehicle 102 may include the computing device 218 (also referred to as an "electronic control unit" (ECU), a "system controller," or a "computing unit") configured to facilitate one or more control operations (e.g., safety operations, anomaly detection, object detection, object avoidance, and remote planning operations) of the agricultural vehicle 102 and/or agricultural operation. As described with reference to FIG. 2, the computing device 218 may include the anomaly detection system 202, and one or more additional controllers 226. While the computing device 218 is illustrated as proximate to the engine compartment 208, such as between the engine compartment 208 and the operator cabin 206, in FIG. 2, the disclosure is not so limited. The computing device 218 may be operably coupled to the agricultural vehicle 102 at other locations. In some embodiments, the computing device 218 is located inside the operator cabin 206, such as proximate to an I/O device 232. In some embodiments, the computing device 218 is located on a device separate from the agricultural vehicle 102 (but located within the agricultural vehicle 102, such as in the operator cabin 206), such as on a tablet, laptop, or other device.

The agricultural vehicle 102 may further include a global navigation satellite system (GNSS) unit 228, an inertial measurement unit (IMU) 230, an input/output (I/O) device 232, and a global system for mobile communication (GSM) 234 (e.g., a telecommunication unit). In some embodiments, the I/O device 232 includes a user interface or display device. The I/O device 232 may include one or more devices configured to receiving a user input (e.g., from an operator) of the agricultural vehicle 102 and may include one or more of a keyboard, mouse, microphone, remote control device, button, joystick, trackball, touchpad, lightpen, speaker, and display device. The I/O device 232 may be configured to receive a user input from the operator of the agricultural vehicle 102 and/or to provide one or more displays to the user. The I/O device 232 displays may include touch screen displays, non-touch screen displays, color displays, non-color displays, or any combination thereof.

While the GNSS unit 228, the IMU 230, and the GSM 234 are illustrated as part of the computing device 218, in other embodiments, one or more of the GNSS unit 228, the IMU 230, the I/O device 232, and the GSM 234 are not part of the computing device 218 and are in operable communication with the computing device 218. For example, the IMU 230 may be operably coupled to a chassis 242 of the agricultural vehicle 102, and one or both of the GNSS unit 228 and the GSM 234 may be operably coupled to the agricultural vehicle 102 external to the computing device 218.

The anomaly detection system 202 may be in operable communication with the IMU 230, the GNSS unit 228, and the GSM 234, in addition to the one or more additional controllers 226 configured to perform one or more control operations of the agricultural vehicle 102, such as one or more navigation controls (e.g., control of steering, acceleration, velocity, braking, and/or navigation of the agricultural vehicle 102). The anomaly detection system 202 may be configured to facilitate one or more safe operations of the agricultural vehicle 102. For example, the anomaly detection system 202 may be configured to facilitate anomaly avoidance of objects or other obstacles identified based on data from the one or more cameras 214, the one or more LiDAR units 212, and the one or more RADAR units 216, and/or other sensors to perform autonomous vehicle operation, to perform a leader-follower operation, to provide a display of the surroundings of the agricultural vehicle 102 to the I/O device 232, and to provide anomaly predictions to a remote location for remote planning, for example. In some embodiments, the anomaly detection system 202 is configured to determine one or more anomalies based on image data from one or more of the cameras 214. The anomaly detection system 202 may determine whether the predicted anomalies detected based on image data from at least one camera 214 is predicted with image data and/or matches with an anomaly predicted by the anomaly detection system 202 based on image data from another of the cameras 214. Based on the predicted anomalies, the anomaly detection system 202 may be configured to avoid the predicted anomalies and/or perform one or more control operations of the agricultural vehicle 102. In addition, in some embodiments, the anomaly detection system 202 is configured to generate a depth map and/or depth data based on the image data. The one or more control operations of the agricultural vehicle 102 may be based on the predicted anomalies and the depth map and/or depth data.

The anomaly detection system 202 may be in operable communication with the one or more cameras 214, the one or more LiDAR units 212, the one or more RADAR units 216, and any other sensors operably mounted to the agricultural vehicle 102 such as by wired or wireless communication. The anomaly detection system 202 may be configured to receive data from any of these sensors and facilitate anomaly detection in connection with the received data. To illustrate, the anomaly detection system 202 can apply various types of machine learning models to combinations of the sensor data acquired from the one or more cameras 214, the one or more LiDAR units 212, the one or more RADAR units 216, and other sensors to generate digital representations of the agricultural field 104 surrounding the agricultural vehicle 102. In some embodiments, the anomaly detection system 202 generates image data from the one or more cameras 214 and applies an anomaly detection deep neural network to the image data to generate anomaly data, which may include one or more anomaly predictions. In some embodiments, the anomaly detection system includes an anomaly detector associated with each camera 214. The anomaly detection system 202 may further generate a depth map and/or a 3D point cloud based on the image data. Further, the anomaly detection system 202 may combine the anomaly data based on the image data from different cameras 214 to identify that the predicted anomalies and/or the anomaly data determined by each anomaly detector matches the predicted anomalies and/or the anomaly data determined by different anomaly detectors, whether the predicted anomalies and/or the anomaly data do not match one or more other predicted anomalies and/or the anomaly data determined by different anomaly detectors, and/or whether the predicted anomalies and/or the anomaly data match some of the one or more other predicted anomalies and/or the anomaly data determined by different anomaly detectors and do not match others of the one or more other predicted anomalies and/or the anomaly data determined by different anomaly detectors. In some embodiments, the anomaly detection system 202 captures image data from the one or more cameras 214, rectifies the image data, and based on the rectified image data, generates a depth map of the agricultural field 104 and/or predicts anomalies surrounding the agricultural vehicle 102. Based on these determinations (e.g., the depth map, the predicted anomalies), the anomaly detection system 202 can further control operations of the agricultural vehicle 102 to avoid the identified anomalies, stop operation of the agricultural vehicle 102, make route changes for the agricultural vehicle 102, sound an alarm associated with the agricultural vehicle 102, and more.

In more detail, the one or more additional controllers 226 may include one or more of a speed controller, a track adjustment controller, a height adjustment controller, and a controller for facilitating one or more agricultural operations (e.g., a planting operation, a spreading operation, a spraying operation, a bailing operation, a cutting operation, a harvesting operation, or another operation).

In some embodiments, the GNSS 228 is in operable communication with a receiver 240. In some embodiments, the GNSS 228 includes a global positioning system (GPS) and the receiver 240 includes a GPS receiver. The receiver 240 may be configured for determining a position of the agricultural vehicle 102 during operation of the agricultural vehicle 102 (e.g., during traversal of the agricultural field 104 with the agricultural vehicle 102 and/or during capturing of image data with the one or more cameras 214 and capturing of RADAR data with the one or more RADAR units 216.

The IMU 230 may be operably coupled to the agricultural vehicle 102, such as to a chassis 242 of the agricultural vehicle 102. The computing device 218 may be in operable communication with and configured to receive data from the IMU 230. The IMU 230 may be configured to measure one or more of a specific force, an angular rate, and an orientation of the agricultural vehicle 102 and may include at least one of each of an accelerometer, a gyroscope, and a magnetometer. The IMU 230 may be configured to facilitate determining one or more of a linear acceleration of the agricultural vehicle 102, a direction of travel of the agricultural vehicle 102, rotational rates and angular velocity, and a strength and direction of a magnetic field. In some embodiments, each of three mutually orthogonal axes (e.g., the pitch, roll, and yaw) of the agricultural vehicle 102 include an accelerometer, a gyroscope, and a magnetometer.

The GSM 234 may include a digital mobile network and may facilitate digital communications between the agricultural vehicle 102 (e.g., the computing device 218, the anomaly detection system 202, and the one or more additional controllers 226).

In some embodiments, an object 244 (which may also be referred to as an "alignment object" or a "reference object") may be located on the agricultural vehicle 102 and may include a reference for alignment of data from the one or more cameras 214, the one or more LiDAR units 212, the one or more RADAR units 216, and any other sensors. In some embodiments, the object 244 is located on the ground of the agricultural field 104. In other embodiments, the object 244 is fixedly coupled to the agricultural vehicle 102 and in the FOV of at least one of the one or more cameras 214 and at least one of the one or more RADAR units 216.

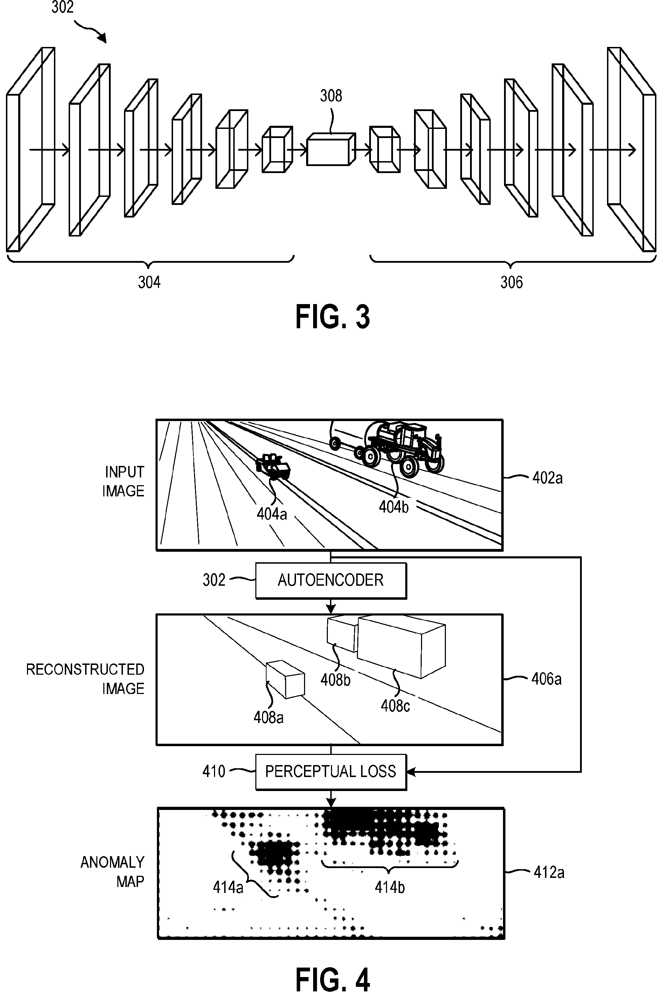

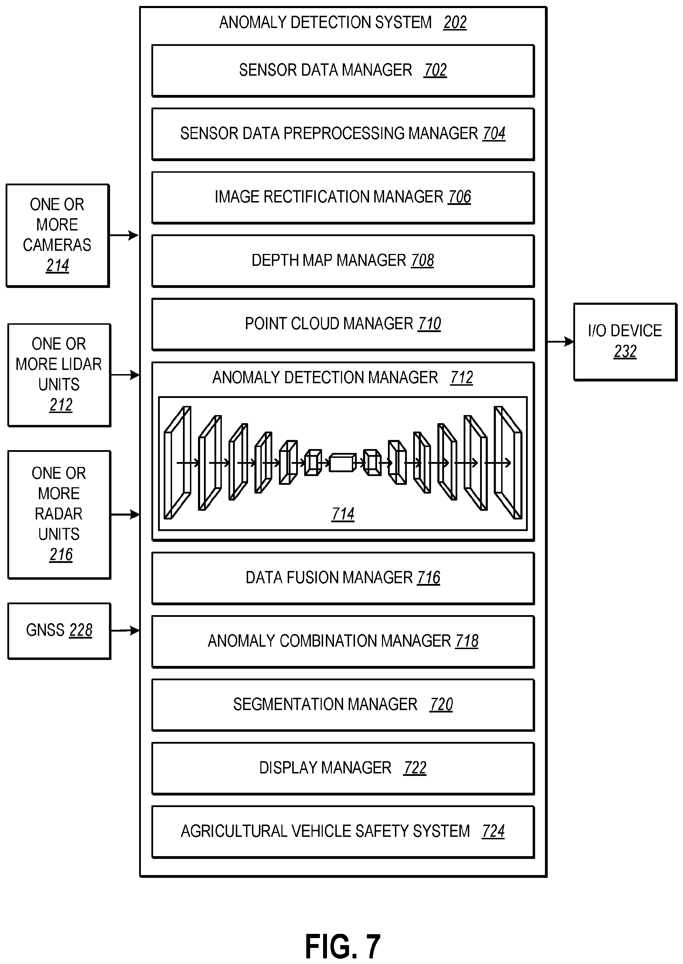

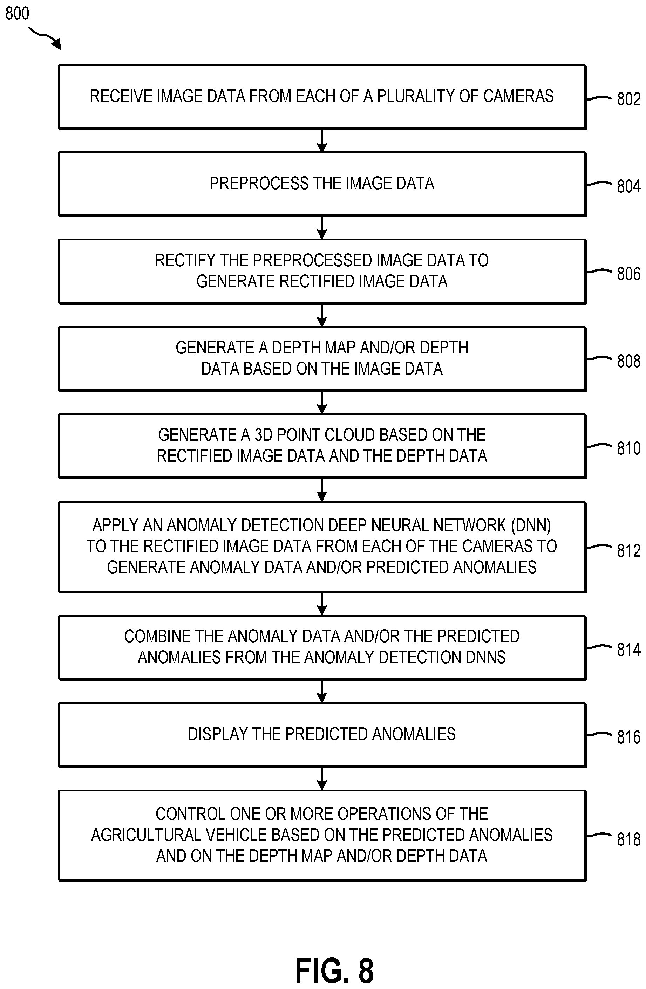

As mentioned above, the anomaly detection system 202 utilizes data from various sensors operably coupled to the agricultural vehicle 102 to robustly and accurately detect a wide range of anomalies within the agricultural field 104. FIGS. 3-6 provide an overview of how the anomaly detection system 202 detects these anomalies. FIG. 7 provides additional detail related to specific implementations of the anomaly detection system 202. FIG. 8 provides overviews of different methods of detecting anomalies and controlling operations of the agricultural vehicle 102 based on the detected anomalies.

In one or more embodiments, the anomaly detection system 202 implements an auto-encoder 302, such as illustrated in FIG. 3. For example, while other object detectors are limited to a predefined set of classes, the anomaly detection system 202 trains and maintains the auto-encoder 302 to recognize deviations from an established baseline pattern. In this way the auto-encoder 302 can detect a wide range of anomalies without being trained with a large and/or annotated training set.

In more detail, as shown in FIG. 3, the auto-encoder 302 (sometimes called an encoder-decoder) can include an encoder 304 and a decoder 306. In one or more embodiments, anomaly detection system 202 trains the auto-encoder 302 to encode (i.e., with the encoder 304) input data into a lower-dimensional representation (e.g., latent space) and then decode (i.e., with the decoder 306) it into a representation of the original input. For example, the encoder 304 can compress the input data into a smaller representation 308 of itself. The decoder 306 then reconstructs the original input from this smaller representation. This reconstruction is based on how the anomaly detection system 202 trains the auto-encoder 302.

In one or more embodiments, the anomaly detection system 202 trains the auto-encoder 302 on a dataset containing normal or typical sensor data associated with agricultural settings. For example, this dataset can include images and/or videos of normal agricultural fields (e.g., with no anomalies), RADAR data from normal agricultural fields, LiDAR data from normal agricultural fields, and so forth. Generally, training seeks to minimize the difference between the data input into the encoder 304 of the auto-encoder 302 and the reconstructed data generated by the decoder 306 of the auto-encoder 302. As a result of being trained on this "normal" data related to agricultural fields, the auto-encoder 302 learns to identify anomalies including anything that may be abnormal or anomalous in new (e.g., unlearned) agricultural field data. In one or more implementations, and unlike standard model training, training the auto-encoder 302 does not require a large dataset or annotated input data. Instead, the anomaly detection system 202 trains the auto-encoder 302 to generate reconstructed data that includes areas of poor reconstruction where anomalies exist in the underlying input.

To illustrate, FIG. 4 provides an overview of the anomaly detection system 202 identifying areas of anomaly in an input image 402a. For example, the input image 402a may be captured by the one or more cameras 214 mounted on the agricultural vehicle 102. As shown in the input image 402a, the agricultural field 104 may include additional vehicles 404a, 404b that surround the agricultural vehicle 102. In this example, the anomaly detection system 202 can generate an input vector from the input image 402a and apply the auto-encoder 302 to the generated input vector. As discussed above, the encoder 304 of the auto-encoder 302 can compress the input vector into a smaller representation 308, and then the decoder 306 of the auto-encoder 302 can generate a reconstructed image 406a that represents the original input image 402a. In one or more implementations, the auto-encoder 302 generates the reconstructed image 406a with areas 408a, 408b, and 408c of poor reconstruction. As discussed above, these areas 408a-408c of poor reconstruction indicate that the auto-encoder 302 found anomalous or unexpected data in those areas of the input image 402a. In the example shown in FIG. 4, the detected anomalies include a small vehicle and a larger agricultural vehicle in the agricultural field 104 near the agricultural vehicle 102.

In one or more embodiments, the anomaly detection system 202 applies one or more perceptual loss functions 410 (or reconstruction loss functions, such as feature reconstruction loss functions and/or reconstruction loss functions of non-feature-based losses) to the reconstructed image 406a. For example, the perceptual loss functions 410 are applied to compare the entire input image 502a to the reconstructed image 506a to determine the areas 508a-508c of poor reconstruction. In some embodiments, the anomaly detection system 202 can utilize the one or more perceptual loss functions 410 to compare the areas 408a-408c to additional, specific features. To illustrate, the one or more perceptual loss functions 410 may compare the areas 408a-408c to known anomalies such as vehicles, humans, animals, and other objects and obstacles. In at least one embodiment, the one or more perceptual loss functions 410 can generate an anomaly map 412a. For example, the anomaly map 412a can include heat map features where anomalies 414a, 414b are indicated within the anomaly map 412a are different or "hotter" colors. In additional implementations, the anomaly map 412a may include bounding boxes associated with the anomalies 414a, 414b indicating predicted edges of the anomalies 414a, 414b, and/or scores associated with the anomalies 414a, 414b indicating how likely it is that the geographic areas surrounding the agricultural vehicle 102 and corresponding to the predicted anomalies 414a, 414b actually include agricultural anomalies.

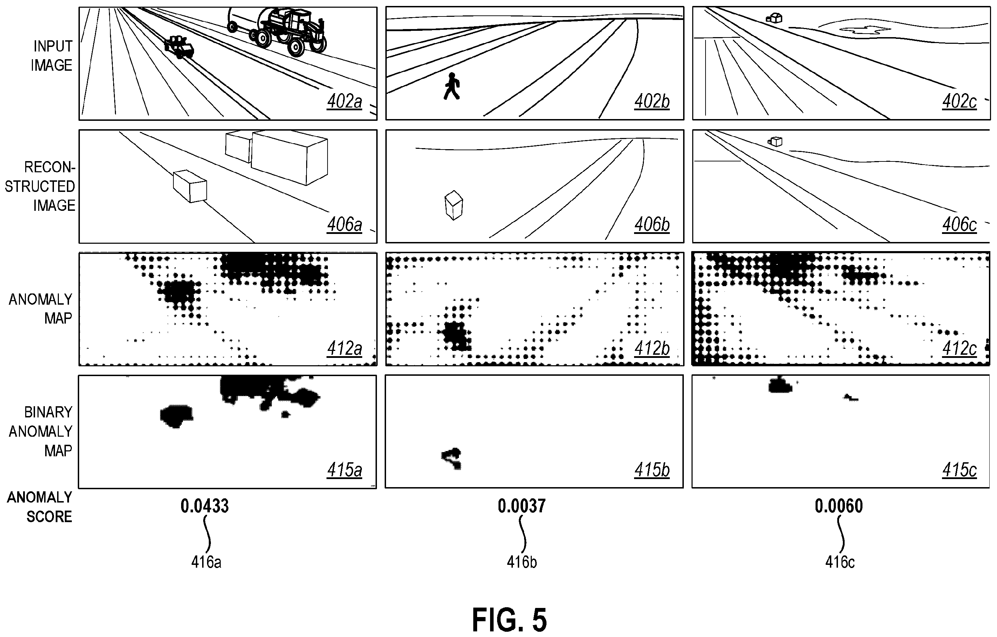

In more detail, FIG. 5 illustrates additional information associated with the anomaly detection process. For example, the anomaly detection system 202 applies the auto-encoder 302 to the input images 402b, 402c in addition to the input image 402a to generate the reconstructed images 406a, 406b, and 406c. As discussed above, the reconstructed images 406a-406c include areas of poor reconstruction. In response to further applying one or more perceptual loss functions 410 to the reconstructed images 406a-406c, the anomaly detection system 202 generates anomaly maps 412a, 412b, and 412c, respectively. As discussed above, the anomaly maps 412a-412c can function as heat maps where predicted anomalies have a "hotter temperature" than surrounding areas.

As further shown in FIG. 5, in at least one embodiment, the anomaly detection system 202 can further generate binary anomaly maps 415a, 415b, 415c, respectively, from the anomaly maps 412a-412c. For example, the anomaly detection system 202 can generate the binary anomaly maps 415a-415c by thresholding the anomaly maps 412a-412c (e.g., at the pixel level) and applying morphological operations as a post-processing operation. In some embodiments, the anomaly detection systems generate the binary anomaly maps 415a-415c by determining outer edges of the "hot" areas in the anomaly maps 412a-412c. The anomaly detection system 202 can then mask the pixels within these outer edges with a single color (e.g., white), and mask the pixels outside these outer edges with a different color (e.g., black). In some embodiments, the anomaly detection systems generate the binary anomaly maps 415a-415c by clustering methods and/or deep learning approaches.

Additionally, as shown in FIG. 5, anomaly detection system 202 can also generate anomaly scores 416a, 416b, and 416c, respectively for the anomalies detected in connection with the input images 402a-402c. For example, the anomaly detection system 202 can utilize the intensity of the "hot" areas in the anomaly maps 412a-412c in combination with the size of the masked areas in the binary anomaly maps 415a-415c to generate the anomaly scores 416a-416c. In one or more implementations, the anomaly scores 416a-416c indicate a likelihood that the corresponding input images 402a-402c depict an anomaly. Additionally or alternatively, the anomaly scores 416a-416c can indicate a severity, size, or speed of a predicted anomaly depicted in each of the input images 402a-402c.

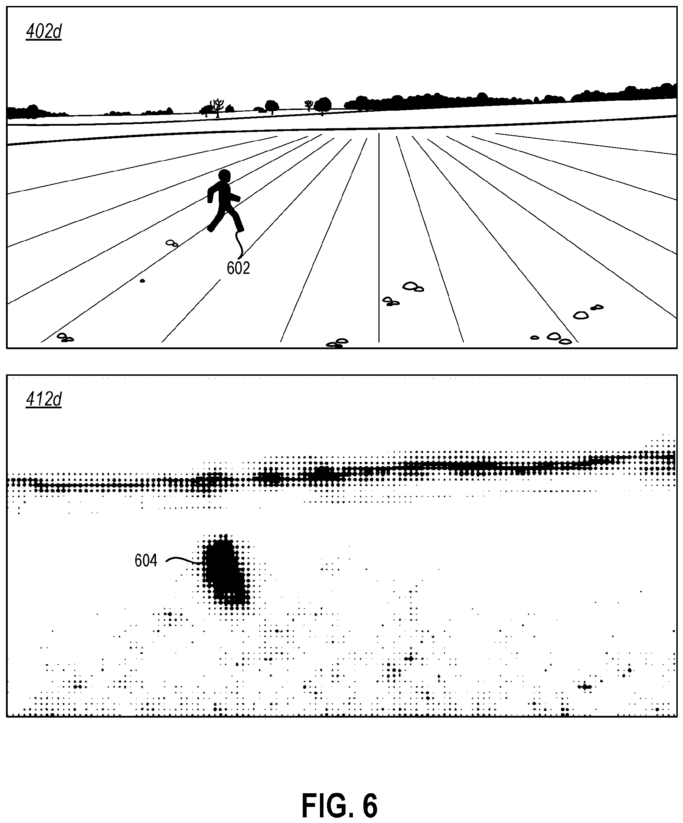

To further illustrate, as shown in FIG. 6, an input image 402d can depict a person 602 walking in front of the agricultural vehicle 102 in the agricultural field 104. The anomaly detection system 202 can apply the auto-encoder 302 to the input image 402d to generate the anomaly map 412d. In one or more implementations, the heat or color intensity of the area 604 in the anomaly map 412d can indicate both that an anomaly is present in that area, and that the severity of that anomaly (e.g., relative to the agricultural vehicle 102) is high because the anomaly is moving at a speed that is slower than that of the agricultural vehicle 102 moving toward the anomaly-indicating a possible collision. As mentioned above, the anomaly detection system 202 can perform one or more safety or security actions based on this severity such as slowing the agricultural vehicle 102, stopping the agricultural vehicle 102, sounding an alarm within the agricultural vehicle 102, flashing one or more displayed components on the I/O device 232 inside the agricultural vehicle 102, and so forth.

While FIGS. 3-6 illustrate how the anomaly detection system 202 detects anomalies in connection with input images captured by the one or more cameras 214 on the agricultural vehicle 102, the anomaly detection system 202 can similarly detect anomalies in connection with other types of sensor data. For example, the anomaly detection system 202 can train the auto-encoder 302 to detect anomalies in sensor data from the one or more LiDAR units 212, the one or more RADAR units 216, and so forth. Additionally, the anomaly detection system 202 can also train the auto-encoder 302 to detect anomalies in combinations of sensor data from any of the sensors discussed herein.

As discussed above, the anomaly detection system 202 detects anomalies across a wide variety of agricultural scenarios and implementations. FIG. 7 illustrates an embodiment of the anomaly detection system 202 operating in connection with the agricultural vehicle 102 and the agricultural field 104. For example, FIG. 7 illustrates how the anomaly detection system 202 can use data from one or more cameras 214, detect anomalies within that sensor data (the image data), apply an anomaly detection deep neural network to the image data from each of the cameras 214 to predict anomalies based on the image data from each of the cameras 214, and combine the predicted anomalies based on the image data from each of the cameras 214 to control one or more operations of the agricultural vehicle.

In more detail, a sensor data manager 702 of the anomaly detection system 202 can receive sensor data from the one or more cameras 214, the one or more LiDAR units 212, one or more radar units 216, and other sensors (e.g., the GSM 234, the IMU 230). In some embodiments, the anomaly detection system 202 receives data from the GNSS unit 228. The sensor data manager 702 may receive digital images (image data) captured by the one or more cameras 214-either individually or in sequences. Additionally, in some embodiments, the sensor data manager 702 can receive one or more scans from the one or more LiDAR units 212. In some embodiments, the sensor data manager 702 can synchronize the received sensor data such that images and LiDAR scans are grouped together by the same or similar timestamps.

As further shown in FIG. 7, the anomaly detection system 202 may further include a sensor data preprocessing manager 704. In one or more implementations, the sensor data preprocessing manager 704 preprocesses the LiDAR and/or RADAR scan sequences (if the sensor data includes LiDAR data and RADAR data) prior to anomaly detection. For example, the sensor data preprocessing manager 704 can filter noise and irrelevant information out of the LiDAR and/or RADAR scan sequences. Additionally, the sensor data preprocessing manager 704 can align the LiDAR and/or RADAR scan sequences in a common coordinate system thus synchronizing temporal data with the spatial data represented in the scan sequences. By way of non-limiting example, preprocessing of the sequence of LiDAR scans and the sequence of RADAR scans can include one or more of: filtering noise out of the sequence of LiDAR scans and the sequence of RADAR scans, aligning the sequence of LiDAR scans and the sequence of RADAR scans to a common coordinate system, and synchronizing sequence of LiDAR scans and the sequence of RADAR scans.

In one or more embodiments, the sensor data preprocessing manager 704 can synchronize the sensor data received by the GNSS unit 228 and other sensors. For example, the sensor data preprocessing manager 704 can utilize the GNSS time references (e.g., PTP or PPS) associated with each GNSS reading to synchronize sensor data from the one or more cameras 214, the one or more RADAR units 216, and the one or more LiDAR units 212. To illustrate, the sensor data preprocessing manager 704 can identify a GNSS time reference for a first GNSS data input, identify a first spatial data input (a first image data input) with a timestamp that corresponds to the GNSS time reference, and match the first GNSS data input with the first spatial data input. The GNSS time reference may include a precision time protocol (PTP) time reference or a pulse-per-second (PPS) time reference. In at least one implementation, this synchronization helps to ensure accurate alignment of spatial information with the GNSS data. In other words, the spatial data (e.g., the image data) may be aligned with GNSS data (global coordinate data).

The anomaly detection system 202 may further include an image rectification manager 706. In some embodiments, the image rectification manager 706 rectifies the image data from the one or more cameras 214 and/or one or more lenses of each camera 214. The image data that is rectified may include the synchronized image data including data that is synchronized with a GNSS time reference.

The image rectification manager 706 may be configured to transform the image data from each of the cameras 214 (including the image data from each lens of each camera 214) to align corresponding points of image data from the different lenses of the camera 214 onto the same coordinate system (e.g., the same horizontal level) to generate rectified image data, which may be beneficial for the anomaly detection and depth estimation based on the image data (and/or the rectified image data). By way of non-limiting example, the image rectification manager 706 may be configured to determine the epipoles of the image data, apply projective transformation to rotate and align the images in a coordinate system, and scale the image data to match the resolutions of the image data captured by the different cameras 214. Accordingly, corresponding points in the image data from different cameras 214 of a tricamera set and/or of different lenses of a stereo camera 214 may be synchronized such that they are located on the same scan lines, facilitating simplified subsequent processing of the image data, such as disparity estimation (described with respect to a depth map manager 708).

The image rectification manager 706 may be configured to align the images (the image data) gathered by each lens of each camera 214 separately to generate rectified image data and/or rectified images. In particular, image data gathered by different lenses (including different image sensors and/or film frames) of a single camera 214 (a stereo camera) may be aligned, such as by projecting the images from different lenses of the stereo camera onto a common image plane, which may facilitate aligning corresponding points in the image data from the lenses of the stereo camera along the same row coordinates. Alignment of the image data may facilitate matching points in the image data obtained by the different lenses of the camera 214. For example, in some embodiments, the image rectification manager 706 is configured to perform stereo matching of the images and/or the image data obtained by the different lenses of the camera 214. In some embodiments, the image rectification manager 706 is further configured to correct distortions caused by different perspectives of the different lenses of each camera 214. Further, the image rectification manager 706 may facilitate alignment of epipolar lines (lines along which the matching points in the image data line) such that the lines are horizontal and parallel in each of the images and/or sets of image data. Accordingly, the image rectification manager 706 may transform the images and/or image data from each of the cameras 214 to generate rectified image data and make the images and/or image data easier to process for depth estimation, generation of depth maps, and 3D reconstruction.

With continued reference to FIG. 7, the anomaly detection system 202 may further include a depth map manager 708. The depth map manager 708 may be configured to generate a depth map and/or depth information based on the rectified image data and/or the rectified image. For example, the depth map manager 708 may receive the rectified image data from the image rectification manager 706 and generate a disparity map and/or depth information indicative of the positions of corresponding points in the different images and/or sets of rectified image data received from the image rectification manager 706.

By way of non-limiting example, the disparity map and/or disparity data may be generated using one or more of block matching (e.g., classical block matching, semi-global block matching), techniques such as Recurrent All-Pairs Field Transforms (RAFT; a deep learning method to find corresponding pixel pairs in two images), and/or optical flow estimation methods. The disparity data and/or disparity map may be generated by comparing the displacement (the horizontal displacement) of corresponding points in the rectified image data. The disparity data may include an indication of how much each point has shifted between two images, which may be used to infer the depth of the point.

Responsive to determining the disparity map and/or the disparity data, the depth map manager 708 may be configured to generate a depth map and/or determine depth information based on the disparity data and/or the disparity map and the focal length of the camera 214 from which the rectified image data (used to generate the disparity data) was captured, and the baseline distance between the two lenses of the camera 214. The depth data may correspond to the distance between the camera 214 and the point. Each pixel in the depth map or depth data may include image data (rectified image data), disparity data, and depth data, wherein each pixel includes a value indicative of a distance of that pixel from the camera 214. Accordingly, the depth map manager 708 may be configured to generate information about the distance and the spatial relationships (e.g., spatial distributions) of objects in the agricultural field 104, such as those surrounding the agricultural vehicle 102. For example, the depth map manager 708 may be configured to determine the relative distance between objects in the agricultural field 104 relative to one another and/or relative to the agricultural vehicle 102.

In some embodiments, the anomaly detection system 202 optionally includes a point cloud manager 710 configured to generate a 3D point cloud. The 3D point cloud may be based on the disparity map and/or the disparity data. In some embodiments, the 3D point cloud is generated using the image data and using one or more of block matching (e.g., classical block matching, semi-global block matching), techniques such as Recurrent All-Pairs Field Transforms (RAFT; a deep learning method to find corresponding pixel pairs in two images), and/or optical flow estimation methods. The 3D point cloud may include a collection of data points defined in a three-dimensional coordinate system.

In some embodiments, based on the disparity data and the parameters of the camera from which the disparity data was determined (e.g., the focal length, the baseline) the point cloud manager 710 may triangulate the 3D coordinates of each point of the disparity map and/or disparity data to generate the 3D point cloud based on the disparity data. The pixels of the 3D point cloud may include data such as the image data for each point, the depth data for each point, polarization data for each point, and additional data for each point. In some embodiments, the pixels of the 3D point cloud further include LiDAR data and/or RADAR data.

In one or more embodiments, an anomaly detection manager 712 can generate an input vector from the sensor data (e.g., image data) received by one or more of the sensor data manager 702, the sensor data preprocessing manager 704, the image rectification manager 706, the depth map manager 708, and the point cloud manager 710. For example, the anomaly detection manager 712 can train and maintain an anomaly detection deep neural network (DNN) 714 that detects anomalies in agricultural sensor data (e.g., the image data of the agricultural field 104). As such, the anomaly detection manager 712 can generate an input vector for the anomaly detection DNN 714 from the sensor data (e.g., the image data, the preprocessed image data, the rectified image data) where features of the sensor data are represented in the input vector. The anomaly detection manager 712 can then apply the anomaly detection DNN 714 to the input vector to generate one or more anomaly predictions associated with the agricultural field 104 surrounding the agricultural vehicle 102. In one or more embodiments, the anomaly detection DNN 714 includes an auto-encoder (e.g., the auto-encoder 302 as shown in FIG. 3).

In some embodiments, once image data from a camera 214 is preprocessed (e.g., synchronized across one or more GNSS time references) and/or rectified, the anomaly detection manager 712 may generate an input vector capturing features of the preprocessed and/or rectified image data for the respective camera 214. The anomaly detection manager 712 can further apply the anomaly detection DNN 714 to the generated input vector to generate one or more anomaly predictions based on the image data from the respective camera 214. In some embodiments, and as described in additional detail herein, the anomaly detection manager 712 may include an anomaly detection DNN 714 associated with each camera 214 and trained with a unique dataset that is different than the anomaly detection DNNs 714 that are associated with the other cameras 214. In some embodiments, each anomaly detection DNN 714 comprises an anomaly detector and, the anomaly detection manager 712 is configured to apply the anomaly detection DNN 714 to image data from a respective camera 214 to generate predicated anomalies based on the image data from the respective camera 214. In other words, in some embodiments, the anomaly detection system 202 includes a same number of anomaly detectors as a number of cameras 214 (e.g., stereo cameras) coupled to the agricultural vehicle 102.

In some embodiments, the anomaly detection manager 712 applies the anomaly detection DNN 714 to different types of sensor data individually. For example, in one embodiment, the anomaly detection manager 712 applies the anomaly detection DNN 714 to an input vector generated with only the data provided by the one or more cameras 214. In some such embodiments, the DNN 714 generates one or more image data-based anomaly predictions associated with the agricultural field 104. In some embodiments, the anomaly detection manager 712 applies an anomaly detection DNN 714 to the image data provided by each camera 214 separately to generate predicted anomalies associated with the image data from each camera 214 separately. Similarly, in some embodiments, the anomaly detection manager 712 applies the anomaly detection DNN 714 to the LiDAR data to generate one or more LiDAR-based anomaly predictions associated with the agricultural field 104.

As discussed above, in one or more implementations, the anomaly detection DNN 714 includes an encoder-decoder computational model (e.g., the auto-encoder 302 discussed above in connection with FIG. 3). In at least one implementation, the anomaly detection system 202 trains the anomaly detection DNN 714 on typical (e.g., non-anomalous) agricultural sensor data (image data) until the anomaly detection DNN 714 learns to recognize features in agricultural data that are not typical (e.g., anomalous). Thus, in some implementations, the anomaly detection DNN 714 generates anomaly predictions that indicate both the item of sensor data that was anomalous (e.g., an area in a digital image, a portion of a LiDAR scan) and a certainty score indicating the likelihood that item of sensor data contains an anomaly. In some implementations, the anomaly detection DNN 714 may be a different type of machine learning model such as a convolutional neural network, transformer, a recurrent neural network (RNN), a long short-term memory (LSTM) network, or a hybrid network.

In some implementations, the anomaly detection manager 712 trains and maintains a single anomaly detection DNN 714 to apply to various types of sensor data input vectors. For example, the anomaly detection manager 712 can train the anomaly detection DNN 714 across a range of sensor data types to generate anomaly predictions associated with any type or combination of input sensor data. Additionally or alternatively, the anomaly detection manager 712 can train and maintain separate anomaly detection DNNs that are each specific to a single type of input data. In that implementation, for example, the anomaly detection manager 712 can apply an anomaly detection DNN 714 that is specific to digital images (image data from the one or more cameras 214) to a digital image-based input vector to generate one or more image-based anomaly predictions. In some embodiments, the anomaly detection manager 712 can apply an anomaly detection DNN that is specific to LiDAR scans to a LiDAR-based input vector to generate one or more LiDAR-based anomaly predictions.

In some embodiments, as described above, the anomaly detection manager 712 is configured to use an anomaly detection DNN 714 for each camera 214 individually. The anomaly detection DNN 714 may be different for each of the cameras 214 and may be trained with image data obtained with the respective camera 214 and based on, for example, the orientation and pose of the respective camera 214. In other words, the anomaly detection system 202 may train the anomaly detection DNN 714 of each camera 214 separately based on typical image data until the anomaly detection DNN 714 learns to recognize features in the agricultural data that are not typical for the image data from the respective camera 214. In some embodiments, the anomaly detection manager 712 predicts anomalies using separate anomaly detection DNNs 714 each trained on a different dataset. In some embodiments, the anomaly detection DNN 714 for each camera 214 generates anomaly predictions that predict anomalies in the agricultural field and a certainty score indicating the likelihood that item of sensor data contains the predicted anomaly. Since a plurality of cameras 214 may be operably coupled to the agricultural vehicle 102, the anomaly detection system 202 may include multiple anomaly detection DNNs 714, each trained to predict anomalies based on image data received from a respective camera 214. Each anomaly detection DNN 714 trained to predict anomalies based on image data from a particular camera 214 may be referred to as a unique anomaly detector. Accordingly, each camera 214 may include or be associated with a unique anomaly detector.

In some embodiments, the anomaly detection DNN 714 used to analyze the image data from each camera 214 is different than the anomaly detection DNN 714 used to analyze the image data from other cameras 214. In some embodiments, the anomaly detection DNN 714 used to analyze the image data from each camera 214 is the same as the anomaly detection DNN 714 used to analyze the image data from other cameras 214. In some embodiments, the anomaly detection manager 712 can apply a separate anomaly detection DNN 714 that is specific to the image data from one camera to an image-based input vector to generate one or more image-based anomaly predictions based on image data from the camera 214. Image data from each camera 214 may be used by separate anomaly detection DNNs 714 to generate separate image-based anomaly predictions based on image data from the individual cameras 214. Accordingly, the anomaly detection manager 712 may include a separate anomaly detection DNN 714 that is trained on a dataset that is unique to each camera 214; in other words, each camera 214 may be associated with an anomaly detection DNN 714 that is trained on image data obtained from the respective camera 214.

In some embodiments, the anomaly detection manager 712 is configured to determine one or more predicted anomalies based on image data obtained from the depth map and/or the depth data. In some embodiments, the depth map and/or the depth data is reverted to image data, such as additional image data (different than the image data captured by the camera 214). For example, the depth data may be used to generate the 3D point cloud, as described above with reference to the point cloud manager 710. The 3D point cloud may be projected onto a 2D plane, such as by using the intrinsic parameters of the stereo camera 214 (the focal length, the principal point) to map the 3D points of the 3D point cloud to 2D image coordinates. In some embodiments, the anomaly detection manager 712 may be configured to apply an anomaly detection DNN 714 to the image data obtained by reverting the depth data and/or depth map to the reverted image data.

An output of the anomaly detection manager 712 may include anomaly data which may include the predicted anomalies. The anomaly data may be presented as an anomaly map. In some embodiments, each anomaly detection DNN 714 is configured to generate an anomaly map based on the image data from the camera 214 that the anomaly detection DNN 714 is associated. The predicted anomalies may include information about the location (e.g., in a common coordinate system) of the predicted anomalies, size, shape, duration, color, polarization, depth, or other data about the predicted anomaly, the location of the predicted anomaly in the agricultural field 104 with respect to other predicted anomalies and/or the agricultural vehicle 102. For example, the anomaly data may include an indication of a location, a size, a shape a duration, and/or other properties of predicted anomalies for each set of image data obtained from each camera 214. In some embodiments, the anomaly data includes location data, image data, depth data, polarization data, distance data (e.g., relative to other predicted anomalies, relative to the agricultural vehicle 102), and other data. Accordingly, the anomaly detection manager 712 may generate anomaly data based on image data from each camera 214 using an anomaly detection DNN 714 for image data from each respective camera 214. In some embodiments, the output of the anomaly detection manager 712 includes an anomaly map including a mask wherein areas including predicted anomalies are not masked and areas that do not include a predicted anomaly are masked and may be referred to as an "output mask." In some embodiments, each predicted anomaly will be associated with one or more pixels in the anomaly data. As described above, in some embodiments, the pixels may include information from the depth map manager 708, such as information about the distance and spatial relationships between predicted anomalies relative to one another and/or relative to the agricultural vehicle 102.

In some embodiments, as further shown in FIG. 7, the anomaly detection system 202 may further include a data fusion manager 716. In one or more implementations, the data fusion manager 716 works in parallel or in sequence with the anomaly detection manager 712. For example, the data fusion manager 716 can fuse the sensor data received by the sensor data manager 702 into a point-cloud dataset. As such, the data fusion manager 716 can generate the point-cloud dataset from the received sensor data by synchronizing the different types of sensor data for spatial alignment, and then combining features of the sensor data with extended metadata indicating a three-dimensional position of each pixel relative to the agricultural vehicle 102.

To illustrate, the sensor data manager 702 may receive both LiDAR sensor data from the one or more LiDAR units 212 and image-based sensor data from the one or more cameras 214. In one or more implementations, the data fusion manager 716 can synchronize the LiDAR sensor data and the image-based sensor data for spatial alignment such that images taken at a particular position relative to the agricultural vehicle 102 (e.g., taken straight ahead of the agricultural vehicle 102) are synchronized with LiDAR sensor data captured at the same position relative to the agricultural vehicle 102. The anomaly detection manager 712 can then combine features of the LiDAR data across pixels of the image data with extended metadata to generate combined feature data that indicates a three-dimensional position of each pixel relative to the agricultural vehicle 102.

In some embodiments, the sensor data manager 702 can acquire sensor data from other types of sensors. For example, the sensor data manager 702 can acquire data from the one or more RADAR units 216, global navigational satellite system units (e.g., the GNSS unit 228), telecommunication units (e.g., the GSM 234), and other sensors. The data fusion manager 716 can further fuse this sensor data with the point-cloud dataset such that the point-cloud dataset represents additional spatial and relational information associated with the one or more LiDAR-based anomaly predictions and the one or more image-based anomaly predictions. In some embodiments, the anomaly detection manager 712 applies the anomaly detection DNN 714 to the combined feature data (the fused data) to generate the anomaly predictions.

In some embodiments, the data fusion manager 716 is configured to fuse the depth map and/or depth data with the anomaly data and/or anomaly maps generated by each of the anomaly detection DNNs 714 to generate anomaly data including predicted anomaly information including image data, depth data, and other data.

As further shown in FIG. 7, the anomaly detection system 202 may include an anomaly combination manager 718. The anomaly combination manager 718 may be configured to combine the output from each of the anomaly detectors (the predicted anomalies detected with the anomaly detection manager 712 for each of the sets of image data from each camera 214, the anomaly data generated by the anomaly detectors) to confirm the areas where an anomaly is predicted by more than one anomaly detector (based on image data from more than one camera 214) and to identify anomaly data and/or predicted anomalies that do not match between one or more of the anomaly detectors based on image data from different cameras 214.

In some embodiments, the anomaly combination manager 718 is configured to generate an anomaly map (a combined anomaly map) displaying the location of the predicted anomalies relative to one another and relative to the agricultural vehicle 102 within the agricultural field 104. The anomaly combination manager 718 may be configured to generate a combined anomaly map wherein each predicted anomaly includes data (e.g., a tag) indicating a confidence score and/or confidence level of the predicted anomaly, the image data that predicted the anomaly, whether the predicted anomaly was predicted based on the image data from each of the cameras 214, whether the anomaly detection manager 712 predicted the anomaly with the image data from at least one of the cameras 214 but not from at least another one of the cameras 214, or other data.

The anomaly combination manager 718 may be configured to perform one or more of adversary overlay matching of the anomaly data, pixel-wise combination of the anomaly data, or priority-based masking of the anomaly data. In some embodiments, the anomaly combination manager 718 is configured to segment the combined anomaly map with a single mask highlighting areas where the output from each of the anomaly detection DNNs 714 match. In other words, the anomaly combination manager 718 may generate a map showing locations where each of the anomaly predictions from each of the anomaly detection DNNs 714. In some embodiments, if an anomaly prediction determined by one anomaly detection DNN 714 is predicted at a particular location in the agricultural field 104 and each of the other anomaly detection DNNs 714 predict an anomaly at the same location in the agricultural field 104, the predicted anomaly may be displayed by the anomaly combination manager 718. The anomaly combination manager 718 may highlight such anomalies, which may be referred to as validated anomalies. For example, such anomalies may be identified with a bounding box, highlighting, a heat map, or other indication of the presence of the predicted anomaly. Accordingly, in some embodiments, the output mask from each anomaly detector (each of the anomaly detection DNNs 714) may be merged into a single mask to identify regions of the agricultural field where an anomaly has been predicted by more than one of the anomaly detectors. Such anomalies that are validated by each of the anomaly detectors may be assigned a high confidence score and/or confidence level relative to other predicted anomalies that are not validated by each of the other anomaly detectors.

In some embodiments, the anomaly combination manager 718 is configured to perform a pixel-wise combination operation wherein an instance mask having multiple layers is generated, each layer representing the output from one of the anomaly detectors. A number of layers of the instance mask may correspond to the number of anomaly detectors, which may correspond to the number of cameras 214, as described above. In some such embodiments, the anomaly combination manager 718 may generate a layered combined map of the predicted anomalies.

In some embodiments, the anomaly combination manager 718 is configured to generate a priority-based mask. For example, the anomaly combination manager 718 may generate a first mask including validated anomalies identifying anomalies where each anomaly detector agreed and predicted an anomaly; and a second mask including anomalies that were predicted by one or more anomaly detectors and were not predicted by one or more anomaly detectors (such as at areas of the agricultural field 104 where only some of the anomaly detectors predicted an anomaly while at least some other anomaly detectors did not predict an anomaly).

In some embodiments, the anomaly combination manager 718 assigns a confidence level and/or a confidence score for each of the predicted anomalies. As described above, wherein the anomaly combination manager 718 determines that an anomaly predicted by one anomaly detector matches (is validated) and is predicted by each of the other anomaly detectors, the anomaly combination manager 718 may assign a relatively high confidence level to the predicted anomaly (e.g., the highest confidence level). Where an anomaly is predicted by one of the anomaly detectors and is predicted by at least another anomaly detector but is not predicted by at least one anomaly detector, the predicted anomaly may be assigned a relatively lower confidence level and/or confidence score. Further, where an anomaly is predicted by one of the anomaly detectors and is not predicted by any of the other anomaly detectors, the predicted anomaly may be assigned a relatively lower confidence level and/or confidence score (e.g., the lowest confidence score). For example, responsive to determining that more than one anomaly detector predicted an anomaly at a particular location, the anomaly combination manager 718 may assign the predicted anomaly a relatively high confidence level. An anomaly that is predicted by all of the anomaly detectors may be assigned a confidence level that is higher than a confidence score for an anomaly that is predicted by fewer than all of the anomaly detectors. Similarly, an anomaly that is predicted by only one of the anomaly detectors may be assigned a relatively lower confidence level than an anomaly that is predicted by more than one of the anomaly detectors.

The anomaly combination manager 718 may be configured to combine and/or fuse the anomaly data from each of the anomaly detectors into one or more masks to validate the presence of predicted anomalies based on each of the anomaly detectors predicting an anomaly at a particular location; generate an agreement mask identifying predicted anomalies where the anomaly detected from an anomaly detector matches (agrees) with the other anomaly detectors; and a disagreement mask identifying anomalies predicted by at least one anomaly detector and not predicted by at least another of the anomaly detectors; and an instance mask including multiple layers, each layer corresponding to the predicted anomalies identified by one anomaly detector.

Accordingly, the anomaly detection system 202 may be configured to facilitate reducing false positive predicted anomalies (a predicted anomaly that is truly not present in the agricultural field) and may also reduce false negatives (the failure to identify an anomaly present in the agricultural field). The anomaly detection system may facilitate safer and more efficient operation for the agricultural vehicle.

In some embodiments, the anomaly detection system 202 further includes a segmentation manager 720 configured to segment the anomaly data and/or point cloud data (e.g., based on the data from the point cloud manager 710, the point-cloud from the data fusion manager 716) into individual segments indicating the spatial distribution and relationships between anomalies predicted by the one or more anomaly detectors using the anomaly detection DNNs 714. For example, the segmentation manager 720 may determine positions of each of the anomaly predictions generated by the anomaly detection DNNs 714 of each of the anomaly detectors at relative locations within a point-cloud dataset (e.g., the point-cloud dataset from the data fusion manager 716, the 3D point cloud from the point cloud manager 710) and/or within image data. The segmentation manager 720 can then divide the point-cloud dataset and/or the image data into segments based on the positions of the anomaly predictions and utilize the segments to further determine how the anomalies represented by the anomaly predictions are spatially distributed in the agricultural field 104 relative to the agricultural vehicle 102.

In more detail, the segmentation manager 720 can utilize one or more advanced deep learning computational models to determine relative locations of predicted anomalies within the point-cloud dataset and/or the image data. For example, the segmentation manager 720 can apply an advanced deep learning model to each of one or more anomaly predictions generated by the anomaly detection DNNs 714 of each of the anomaly detectors. In at least one embodiment, the advanced deep learning model can generate relative locations of each of the anomaly predictions within the image data and/or the 3D point cloud.

The segmentation manager 720 can then divide the point-cloud dataset and/or the image data into segments based on these relative positions. For example, in one embodiment, the segmentation manager 720 divides the point-cloud dataset into segments where the position of a predicted anomaly based on image data from one camera 214 aligns with a predicted anomaly based on image data from another camera 214. Such an alignment may serve as a strong indicator of the presence of an anomaly at that relative location. In additional or alternative embodiments, the anomaly segmentation manager 720 may divide the point-cloud dataset and/or the image data into segments where a size of an anomaly prediction exceeds a predetermined benchmark.

In some embodiments, the segmentation manager 720 can determine additional relationships between the one or more predicted anomalies. For example, the segmentation manager 720 can determine whether the segments indicate a specific type of anomaly (e.g., a vehicle, an animal). These additional relationships are further enriched when the image data incorporates additional sensor data (e.g., from the one or more LiDAR units 212, one or more RADAR units 216, the GNSS unit 228, the GSM 234) into the anomaly data.

Finally, the segmentation manager 720 utilizes the segments to determine a spatial distribution of the anomaly predictions relative to the agricultural vehicle 102 within the agricultural field 104. For example, the segmentation manager 720 can determine where a particular segment is located relative to the agricultural vehicle 102. The segmentation manager 720 can then determine how close or far apart each of those segments are located relative to each other and the agricultural vehicle 102. If two or more segments are located within a threshold distance of each other, the segmentation manager 720 may determine that the anomaly predictions are actually associated with a single anomaly. The segmentation manager 720 can then determine how that combined anomaly is positioned relative to the agricultural vehicle 102.

As further shown in FIG. 7, the anomaly detection system 202 may include a display manager 722. In one or more embodiments, the display manager 722 generates one or more displays for the I/O device 232 associated with anomalies that are predicted to be at positions within the agricultural field 104 relative to the agricultural vehicle 102. For example, once the anomaly combination manager 718 utilizes the output from each of the anomaly detectors, the display manager 722 may generate a display highlighting the spatial distribution of each of the predicted anomalies relative to the agricultural vehicle 102 and displaying the predicted anomalies (as described above with reference to the anomaly combination manager 718). For example, the display manager 722 may display the predicted anomalies and identify whether the predicted anomalies by each anomaly detector were validated by each of the other anomaly detectors, only some of the other anomaly detectors, or none of the other anomaly detectors, as described above with reference to the anomaly combination manager. The display manager 722 may display a confidence level for each of the predicted anomalies, a heat map for the predicted anomalies (wherein predicted anomalies with a higher confidence level have a hotter heat signature), and/or different bounding boxes for different predicted anomalies having different confidence levels.

In more detail, the display manager 722 can highlight the position of anomalies relative to a current position of the agricultural vehicle 102, or relative to a path or route that the agricultural vehicle 102 is currently on. The display manager 722 can generate the display using highlight colors, bounding boxes, animations, or any other highlighting technique. In some embodiments, the display manager 722 generates the display using different colors, animations, and/or highlighting for anomalies that are predicted by each of the anomaly detectors compared to anomalies that are predicted by fewer than all of the anomaly detectors. In at least one embodiment, the display manager 722 is configured to generate heatmaps, bounding boxes, segmentation masks, and so forth for the predicted anomalies based on whether or not the anomalies have been predicted by each of the anomaly detectors, a single anomaly detector, or another combination of anomaly detectors. In some embodiments, anomaly predictions that are predicted by each of the anomaly detectors may have a heat map with a hotter heat signature (e.g., a brighter color in a visual display) and/or a larger bounding box relative to other anomaly predictions that are not predicted by all of the anomaly detectors.

In some embodiments, the display manager 722 can generate one or more displays for the I/O device 232 based on the depth map generated by the depth map manager 708 and the data from the anomaly combination manager 718. For example, the display manager 722 can generate a display including the detailed depth map showing the depth of each of the predicted anomalies, along with the confidence level of the predicted anomalies. In addition, the display manager 722 may be configured to display the distance of each predicted anomaly from the agricultural vehicle 102 and/or from at least other predicted anomalies (e.g., each of the other predicted anomalies, the nearest predicted anomalies, predicted anomalies located less than a threshold distance away). The depth map may also include anomaly data, including the locations of the anomalies, the spatial relationships of the anomalies, whether the anomalies are verified by multiple anomaly detectors, each of the anomaly detectors, or a single anomaly detector. Additionally, the display manager 722 can generate additional displays or alerts based on whether proximity between the agricultural vehicle 102 and any of the predicted static anomalies is less than a threshold amount and/or based on the confidence score of the predicted anomalies. In at least one implementation, the display manager 722 can dynamically update the generated displays as the agricultural vehicle 102 moves through the agricultural field 104 relative to positions of the predicted static anomalies.

Additionally, in one or more implementations, the anomaly detection system 202 includes an agricultural vehicle safety system 724. In one or more embodiments, the agricultural vehicle safety system 724 can control operations of the agricultural vehicle 102 based on anomalies that are predicted to be within the agricultural field 104 relative to the agricultural vehicle 102. For example, in response to determining that an anomaly is within a threshold distance from the agricultural vehicle 102 or a threshold distance from a future position of the agricultural vehicle 102, the agricultural vehicle safety system 724 can control a wide range of operations in connection with the agricultural vehicle 102. To illustrate, the agricultural vehicle safety system 724 can: cause the agricultural vehicle 102 to stop moving within the agricultural field 104, cause the agricultural vehicle 102 to slow down in the agricultural field 104, cause the agricultural vehicle 102 to deviate from a pre-planned route in the agricultural field 104, cause the agricultural vehicle 102 to halt operating a front implement of the agricultural vehicle 102 or a rear implement of the agricultural vehicle 102 (e.g., a boom sprayer, a thresher, etc.), cause the agricultural vehicle 102 to use an onboard signal tower to highlight areas of the agricultural field 104 corresponding to the segmented point-cloud dataset, cause the agricultural vehicle 102 to flash onboard visual lights, or cause the agricultural vehicle 102 to sound a horn or other auditory system.

Thus, the embodiment of the anomaly detection system 202 illustrated in FIG. 7 provides a comprehensive solution for detecting anomalies with more than one stereo camera and generating anomaly predictions based on image data from each of the stereo cameras. The use of several stereo cameras may facilitate filtering false positive anomaly detection and false negative anomaly detection, improving the performance and guidance of the agricultural vehicle 102, such as by the agricultural vehicle safety system 724. By integrating image data from several cameras 214, the anomaly detection system 202 enables accurate and robust detection and segmentation of anomalies in an agricultural setting, enhancing the safety and efficiency of agricultural operations.

While the anomaly detection system 202 has been described as primarily generating the predicted anomalies based on the image data from stereo cameras, it is contemplated that the anomaly detection system 202 may generate predicted anomalies using additional sensor data, such as based on LiDAR data and/or RADAR data in addition to the image data. In some such embodiments, the anomaly detection system 202 gathers LiDAR data from one or more LiDAR units. In some embodiments, an anomaly detection DNN 714 is applied to the LiDAR data to predict the presence of one or more anomalies in the LiDAR data. A fusion manager may be configured to work in parallel or in sequence with the anomaly detection manager 712, such as by fusing the sensor data received by the sensor data manager 702 and/or the sensor data preprocessing manager 704 into a point cloud dataset. As used herein, a point-cloud dataset refers to a collection of data points defined in a three-dimensional coordinate system. As such, the data fusion manager can generate the point-cloud dataset from the received sensor data by synchronizing the different types of sensor data for spatial alignment, and then combining features of the sensor data with extended metadata indicating a three-dimensional position of each pixel relative to the agricultural vehicle 102.

To illustrate, the sensor data manager 702 may receive both image-based sensor data from the one or more cameras 214 and LiDAR sensor data from the one or more LiDAR units 212. In one or more implementations, the data fusion manager can synchronize the LiDAR sensor data and the image-based sensor data for spatial alignment such that images taken at a particular position relative to the agricultural vehicle 102 (e.g., taken straight ahead of the agricultural vehicle 102) are synchronized with LiDAR sensor data captured at the same position relative to the agricultural vehicle 102. The anomaly detection manager 712 can then combine features of the LiDAR data across pixels of the image data with extended metadata to generate combined feature data that indicates a three-dimensional position of each pixel relative to the agricultural vehicle 102.

In some embodiments, the sensor data manager 702 can acquire sensor data from other types of sensors. For example, the sensor data manager 702 can acquire data from the one or more RADAR units 216, global navigational satellite system units (e.g., the GNSS unit 228), telecommunication units (e.g., the GSM 234), and other sensors. The data fusion manager can further fuse this sensor data with the point-cloud dataset such that the point-cloud dataset represents additional spatial and relational information associated with the one or more LiDAR-based anomaly predictions and the one or more image-based anomaly predictions. In some embodiments, the anomaly detection manager 712 applies the anomaly detection DNN 714 to the combined feature data (the fused data) to generate the anomaly predictions.

In some embodiments, the anomaly detection system 202 can predict static anomalies and/or dynamic (moving) anomalies. In some embodiments, the anomaly detection system 202 can predict and track dynamic anomalies, while further predicting where each anomaly is moving and controlling the agricultural vehicle 102 accordingly. For example, the sensor data manager may capture LiDAR data, RADAR data, and/or image data sequentially in order to capture temporal data. The captured data may capture dynamic movement of an anomaly.

While the anomaly detection system 202 of FIG. 7 has been described and illustrated as including various components, the disclosure is not so limited. The anomaly detection system 202 may include additional components and/or may not include all of the components described above. For example, in some embodiments, the anomaly detection system 202 does not include a sensor data preprocessing manager 704, a data fusion manager 716, and/or a segmentation manager 720. In some embodiments, the image data is rectified by the image rectification manager 706; the depth map manager 708 analyzes the rectified image data to generate a depth map; the point cloud manager 710 analyzed the rectified image data and/or the depth data to generate a 3D point cloud; the anomaly detection manager 712 applies one or more anomaly detection DNNs 714 to the image data (e.g., the image data, the rectified image data) to generate one or more anomaly predictions (which may include an anomaly map, anomaly data, an anomaly mask); the anomaly combination manager 718 combines the outputs from the different anomaly detection DNNs 714 of the anomaly detection manager 712 to combine the predicted anomalies and generate a combined anomaly map; the display manager 722 displays one or more outputs and/or anomaly predictions; and the agricultural vehicle safety system 724 controls one or more operations of the agricultural vehicle 102 based on the outputs, the anomaly predictions, and/or other data.

FIG. 8 is a simplified flow chart of a method 800 of detecting anomalies in an agricultural field (e.g., the agricultural field 104) relative to an agricultural vehicle (e.g., the agricultural vehicle 102), in accordance with one or more embodiments of the disclosure. The method 800 includes receiving image data from each of a plurality of cameras coupled to the agricultural vehicle, as shown in act 802. The cameras may include stereo cameras, tri-camera sets, or combinations thereof, as described above with reference to the cameras 214. In some embodiments, first image data is received from a first camera and second image data is received from a second camera. Additional image data may be received from each additional camera.

The method 800 may further include preprocessing the image data, as shown in act 804. Preprocessing the image data may include synchronizing the image data from the different cameras, such as within a common coordinate frame and/or across one or more GNSS time references. For example, act 804 may include utilizing a transformer to synchronize the GNSS data and the spatial data across the one or more GNSS time references by: identifying a GNSS time reference for a first GNSS data input, identifying a first spatial data input with a timestamp that corresponds to the GNSS time reference, and matching the first GNSS data input with the first spatial data input. In at least one embodiment, the one or more GNSS time references include precision time protocol (PTP) time references or pulse-per-second (PPS) time references).

The method 800 may further include rectifying the preprocessed image data (or the image data if the image data is not preprocessed) to generate rectified image data, as shown in act 806. The image data may be rectified as described above with reference to the image rectification manager 706.

Responsive to generating the rectified image data, the method 800 further includes generating a depth map and/or depth data, as shown in act 808. The depth map and/or depth data may be generated based on the rectified image data and/or the image data. For example, the depth map and/or depth data may be generated by generating a disparity map and/or disparity data indicative of the positions of corresponding points in the different images and/or sets of rectified image data, such as by using one or more of block matching, RAFT, or other optical flow estimation methods. The depth map and/or the depth data may be determined based on the disparity map and/or disparity data and the baseline and focal length of the camera, as described above. The depth map and/or depth data may be determined using the first image data or the second image data (and/or the rectified first image data and the rectified second image data).

The method 800 may further include generating a 3D point cloud based on the rectified image data and the depth data, as shown in act 810. For example, the 3D point cloud may be generated based on the disparity map and/or the disparity data, as described above with reference to the point cloud manager 710. Of course, the 3D point cloud may be generated by other methods. The 3D point cloud may be generated using the first image data or the second image data (and/or the rectified first image data and the rectified second image data).

The method 800 may further include applying an anomaly detection DNN to the rectified image data (or the image data) from each of the cameras to generate anomaly data and/or predicted anomalies based on the image data from each camera, as shown in act 812. For example, an anomaly detection manager may include an anomaly detection DNN associated with each of the cameras and trained on a unique dataset to predict anomalies in the image data from each camera. An output from each of the anomaly detection DNN may be an output mask showing the location, size, and shape of the predicted anomalies predicted by the particular anomaly detection DNN. The output mask may be similar to, for example, the anomaly map 412a-412c and/or the binary anomaly map 415a-415c.

In some embodiments, a first anomaly detection DNN is applied to the first image data (or the rectified first image data) to generate a first anomaly output including first anomaly data and/or first anomaly predictions. In addition, a second anomaly detection DNN is applied to the second image data (or the rectified second image data) to generate a second anomaly output and/or second anomaly predictions. Additional anomaly detection DNNs may be applied to additional image data to generate additional anomaly outputs and anomaly predictions depending on the number of additional cameras.

In some embodiments, the depth data and/or the depth map is reverted back to image data (e.g., 2D image data) to generate additional image data (reverted image data). One or more anomaly detection DNNs may be applied to the additional image data to generate anomaly data based on the additional image data.

The method 800 may further include combining the anomaly data and/or the predicted anomalies from the anomaly detection DNNs, as shown in act 814. The anomaly data and/or the predicted anomalies may be combined as described above with reference to the anomaly combination manager 718. By way of non-limiting example, in some embodiments, the output mask from each of the anomaly detection DNNs may be compared to determine whether the anomalies predicted by each of the anomaly detection DNNs match with anomaly predictions of the other anomaly detection DNNs and generate a confidence level for each of the predicted anomalies, as described above with reference to the anomaly combination manager 718. In some embodiments, the first anomaly predictions and the second anomaly predictions are combined. Additional anomaly predictions are combined depending on the number of cameras capturing image data, for example.

Responsive to combining the anomaly data, the method 800 may further include displaying the predicted anomalies, as shown in act 816. Displaying the predicted anomalies may include displaying the output from each of the anomaly detection DNNs in a mask, such as in separate layers of a mask, each layer comprising the output from one of the anomaly detection DNNs; displaying the output from each of the anomaly detection DNNs in a mask including a layer for predicted anomalies that match across the different anomaly detection DNNs and a layer for predicted anomalies that do not match across one or more of the different anomaly detection DNNs; or displaying the output from each of the anomaly detection DNNs in a single mask and highlighting predicted anomalies with different confidence levels differently. In addition, displaying the predicted anomalies may include displaying depth information and/or other data for each of the anomalies, such as the relative distance of the predicted anomalies from the agricultural vehicle 102 and/or relative to one another in the agricultural field 104.

The method 800 may further include controlling one or more operations of the agricultural vehicle based on the predicted anomalies and on the depth map and/or depth data, as shown in act 818. For example, controlling the one or more operations of the agricultural vehicle based on the predicted anomalies and on the depth map and/or depth data may include one or more of: causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight areas of the agricultural field indicated by the predicted anomalies, causing the agricultural vehicle to flash onboard visual lights, or causing the agricultural vehicle to sound a horn or other auditory system.

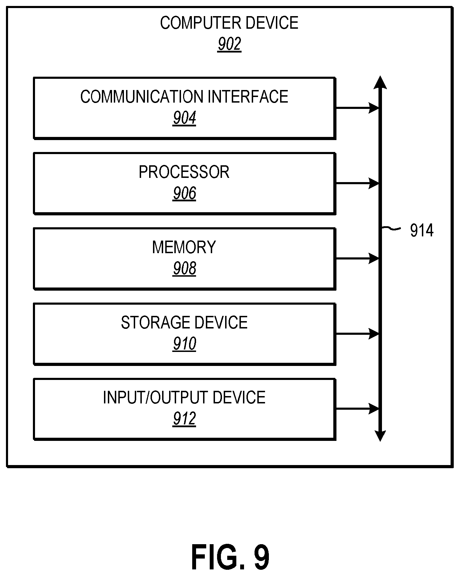

FIG. 9 is a schematic view of a computer device 902, in accordance with embodiments of the disclosure. The computer device 902 may correspond to the computing device 218 (FIG. 2). The computer device 902 may include a communication interface 904, at least one processor 906, a memory 908, a storage device 910, an input/output device 912, and a bus 914. The computer device 902 may be used to implement various functions, operations, acts, processes, and/or methods disclosed herein, such as the method 800.

The communication interface 904 may include hardware, software, or both. The communication interface 904 may provide one or more interfaces for communication (such as, for example, packet-based communication) between the computer device 902 and one or more other computing devices or networks (e.g., a server). As an example, and not by way of limitation, the communication interface 904 may include a network interface controller (NIC) or network adapter for communicating with an Ethernet or other wire-based network or a wireless NIC (WNIC) or wireless adapter for communicating with a wireless network, such as a Wi-Fi network.

The at least one processor 906 may include hardware for executing instructions, such as those making up a computer program. By way of non-limiting example, to execute instructions, the at least one processor 906 may retrieve (or fetch) the instructions from an internal register, an internal cache, the memory 908, or the storage device 910 and decode and execute them to execute instructions. In some embodiments, the at least one processor 906 includes one or more internal caches for data, instructions, or addresses. The at least one processor 906 may include one or more instruction caches, one or more data caches, and one or more translation look aside buffers (TLBs). Instructions in the instruction caches may be copies of instructions in the memory 908 or the storage device 910.

The memory 908 may be coupled to the at least one processor 906. The memory 908 may be used for storing data, metadata, and programs for execution by the processor(s). The memory 908 may include one or more of volatile and non-volatile memories, such as Random-Access Memory ("RAM"), Read-Only Memory ("ROM"), a solid-state disk ("SSD"), Flash, Phase Change Memory ("PCM"), or other types of data storage. The memory 908 may be internal or distributed memory.

The storage device 910 may include storage for storing data or instructions. As an example, and not by way of limitation, storage device 910 may include a non-transitory storage medium described above. The storage device 910 may include a hard disk drive (HDD), Flash memory, an optical disc, a magneto-optical disc, magnetic tape, or a Universal Serial Bus (USB) drive or a combination of two or more of these. The storage device 910 may include removable or non-removable (or fixed) media, where appropriate. The storage device 910 may be internal or external to the storage device 910. In one or more embodiments, the storage device 910 is non-volatile, solid-state memory. In other embodiments, the storage device 910 includes read-only memory (ROM). Where appropriate, this ROM may be a mask programmed ROM, programmable ROM (PROM), erasable PROM (EPROM), electrically erasable PROM (EEPROM), electrically alterable ROM (EAROM), or Flash memory or a combination of two or more of these.

The storage device 910 may include machine-executable code stored thereon. The storage device 910 may include, for example, a non-transitory computer-readable storage medium. The machine-executable code includes information describing functional elements that may be implemented by (e.g., performed by) the at least one processor 906. The at least one processor 906 is adapted to implement (e.g., perform) the functional elements described by the machine-executable code. In some embodiments the at least one processor 906 may be configured to perform the functional elements described by the machine-executable code sequentially, concurrently (e.g., on one or more different hardware platforms), or in one or more parallel process streams.

When implemented by the at least one processor 906, the machine-executable code is configured to adapt the at least one processor 906 to perform operations of embodiments disclosed herein. For example, the machine-executable code may be configured to adapt the at least one processor 906 to perform at least a portion or a totality of any of the method 800 of FIG. 8. As another example, the machine-executable code may be configured to adapt the at least one processor 906 to perform at least a portion or a totality of the operations discussed for the agricultural vehicle 102 of FIG. 2. As a specific, non-limiting example, the machine-executable code may be configured to adapt the at least one processor 906 to cause the I/O device 232 of the agricultural vehicle 102 to display surroundings of the agricultural vehicle 102 including the predicted anomalies, the depth data for the predicted anomalies, and the confidence levels for the predicted anomalies, as described above with reference to the anomaly detection system 202. In another non-limiting example, the machine-executable code may be configured to adapt the at least one processor 906 to cause the agricultural vehicle 102 to perform at least one navigation operation, as described above with reference to the method 800 of FIG. 8.

The input/output device 912 may allow an operator of the agricultural vehicle 102 to provide input to and/or receive output from, the computer device 902. The input/output device 912 may include a mouse, a keypad or a keyboard, a joystick, a touch screen, a camera, an optical scanner, network interface, modem, other known I/O devices, or a combination of such I/O interfaces.

In some embodiments, the bus 914 *(e.g.,* a Controller Area Network (CAN) bus, an ISOBUS (ISO 11783 Compliant Implement Control)) may include hardware, software, or both that couples components of computer device 902 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. A method of operating an agricultural vehicle in an agricultural field, the method comprising:
receiving image data from a plurality of stereo cameras operably coupled to the agricultural vehicle;
rectifying the image data to generate rectified image data for each of the plurality of stereo camera;
generating a depth map of depth data based on the rectified image data;
applying an anomaly detection deep neural network to the rectified image data to generate one or more anomaly predictions;
combining the one or more anomaly predictions based on the rectified image data from each of
the plurality of stereo cameras to generate combined predicted anomaly data; and controlling one or more operations of the agricultural vehicle based on the combined predicted
anomaly data and the depth map.

2. The method of claim 1, wherein receiving image data from a plurality of stereo cameras operably coupled to the agricultural vehicle comprises receiving image data from a plurality of stereo cameras operably coupled to the agricultural vehicle, each stereo camera configured to capture a different perspective of the agricultural field than other stereo cameras of the plurality of stereo cameras.

3. The method of claim 1 or claim 2, further comprising identifying areas of the agricultural field where the predicted anomaly data from more than one of the stereo cameras match.

4. The method of any one of claims 1 through 3, wherein combining the one or more anomaly predictions based on the rectified image data from each of the plurality of stereo cameras to generate combined predicted anomaly data comprises combining predicted anomaly data based on the image data from each of the plurality of stereo cameras into a single mask.

5. The method of any one of claims 1 through 4, wherein combining the one or more anomaly predictions based on the rectified image data from each of the plurality of stereo cameras to generate combined predicted anomaly data comprises generating an instance mask comprising multiple layers based on the combined predicted anomaly data, each layer of the instance mask comprising predicted anomaly data based on image data from a different one of the stereo cameras.

6. The method of any one of claims 1 through 5, wherein combining the one or more anomaly predictions based on the rectified image data from each of the plurality of stereo cameras to generate combined predicted anomaly data comprises generating a priority-based mask based on the combined anomaly data.

7. The method of claim 6, wherein generating a priority-based mask based on the combined anomaly data comprises:
generating a first mask including instances where the one or more anomaly predictions based on the image data from each of the plurality of stereo camera match; and
generating a second mask including instances where the one or more anomaly predictions based on the image data from at least one of the stereo cameras does not match the one or more anomaly predictions based on the image data from at least another of the stereo cameras.

8. The method of any one of claims 1 through 7, further comprising reverting the depth map or depth data to additional image data.

9. The method of claim 8, further comprising applying the anomaly detection deep neural network to the additional image data.

10. The method of any one of claims 1 through 9, wherein generating a depth map of depth data comprises:
performing one or more of block matching, Recurrent All-Pairs Field Transforms (RAFT), or optical flow estimation processes on the rectified image data to generate a disparity map or disparity data; and
generating the depth map based on the disparity data and a focal length of the stereo cameras.

11. An agricultural vehicle positioned in an agricultural field, comprising:
a plurality of stereo cameras coupled to the agricultural vehicle; and
an anomaly detection system operably coupled to the plurality of stereo cameras, the anomaly detection system comprising:
at least one processor; and
at least one non-transitory computer-readable storage medium having instructions thereon that, when executed by the at least one processor, cause the anomaly detection system to:
receive image data from each of the plurality of stereo cameras;
rectify the image data to generate rectified image data for each of the plurality of stereo camera;
generate a depth map based on the rectified image data;
apply an anomaly detection deep neural network to the rectified image data to generate one or more anomaly predictions;
combine the one or more anomaly predictions based on the rectified image data from each of the plurality of stereo cameras to generate combined predicted anomaly data; and
control one or more operations of the agricultural vehicle based on the combined predicted anomaly data.

12. The agricultural vehicle of claim 11, wherein each stereo camera of the plurality of stereo cameras comprises a polarizer array and is configured to generate image data comprises polarization data.

13. The agricultural vehicle of claim 11 or claim 12, wherein the at least one non-transitory computer-readable storage medium further stores instructions thereon that, when executed by the at least one processor, cause the anomaly detection system to determine locations in the agricultural field where an anomaly is predicted based on the rectified image data from each of the plurality of stereo cameras.

14. The agricultural vehicle of any one of claims 11 through 13, wherein the instructions, when executed by the at least one processor, cause the anomaly detection system to:
apply a first anomaly detection deep neural network to the rectified image data from a first stereo camera trained with a first dataset; and
apply a second anomaly detection deep neural network to the rectified image data from a second stereo camera trained with a second dataset.

15. The agricultural vehicle of any one of claims 11 through 14, wherein the instructions, when executed by the at least one processor, cause the anomaly detection system to generate a confidence level for each of the one or more anomaly predictions.
